# EUROPEAN PATENT SPECIFICATION

(11) **EP 3 050 381 B1**
(45) Date of publication and mention of the grant of the patent: **13.03.2019**
(21) Application number: 13826783.6
(22) Date of filing: 20.12.2013
(51) Int. Cl.: H04W 72/04, H04W 74/08

(54) **METHODS AND DEVICES FOR SCHEDULING**
VERFAHREN UND VORRICHTUNGEN ZUR PLANUNG
PROCÉDÉS ET DISPOSITIFS D'ORDONNANCEMENT

(30) Priority: 27.09.2013 US 201361883697 P
(43) Date of publication of application: 03.08.2016
(73) Proprietor: Telefonaktiebolaget LM Ericsson (publ), 164 83 Stockholm (SE)
(72) Inventor: HUANG, Vincent, S-191 50 Sollentuna (SE); VOIGT, Lotta, S-167 71 Bromma (SE); ANDERSSON, Eric, S-177 31 Järfälla (SE); WITTBERG, Mikael, S-753 19 Uppsala (SE); MATTI, Mona, S-131 40 Nacka (SE); SUN, Ying, S-172 72 Sundbyberg (SE)
(74) Representative: Zacco Sweden AB
(86) International application number: PCT/SE2013/051581
(87) International publication number: WO 2015/047145

(56) References cited:
- WO-A1-2008/155372
- US-A1- 2011 105 136
- CATT: "Collision avoidance in uplink semi-persistent scheduling for TDD", 3GPP DRAFT; R2-080121, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080108, 8 January 2008 (2008-01-08), XP050138003, [retrieved on 2008-01-08]
- ERICSSON: "Semi persistent scheduling for TDD", 3GPP DRAFT; R2-082154 SPS FOR TDD, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kansas City, USA; 20080427, 27 April 2008 (2008-04-27), XP050139933, [retrieved on 2008-04-27]

## Description

### Technical field

The technology disclosed herein relates generally to the field of scheduling in communication networks, and in particular to semi-persistent scheduling in such communication networks.

### Background

3GPP LTE (Long Term Evolution) standard has described mainly two types of scheduling, dynamic scheduling and semi-persistent scheduling (SPS). The dynamic scheduling is based on knowledge of buffer status and scheduling of the uplink and downlink transmission is dynamically performed in every subframe by using a dedicated scheduling grant or assignment carried on PDCCH (Physical Downlink Control CHannel). Dynamic scheduling with a new scheduling decision, taken in each subframe, allows for full flexibility in terms of the resources used and can handle large variations in the amount of data to transmit at the cost of the scheduling decision being sent on a PDCCH in each subframe. In many situations, the overhead in terms of control signaling on the PDCCH is well motivated and relatively small compared to the payload on DownLink Shared CHannel/Uplink Shared CHannel (DL-SCH/UL-SCH). However, some services, most notably Voice over Internet Protocol (Vo IP), are characterized by regularly occurring transmission of relatively small payloads. To reduce the control signaling overhead for those services, LTE provides semi-persistent scheduling (SPS) in addition to dynamic scheduling.

With semi-persistent scheduling, the communication device is preconfigured through Radio Resource Control (RRC) signaling about the periodicity (n subframes) and Cell Radio Network Temporary Identifier (C-RNTI) of the semi-persistent grant or assignment. The semi-persistent scheduling is further activated with a special scheduling decision given in the PDCCH with the indication of the allocated resource for the semi-persistent C-RNTI. In reception of the activation grant or assignment, the transmission is carried out in the allocated resource every n:th subframe until a further notice to stop the transmission is made.

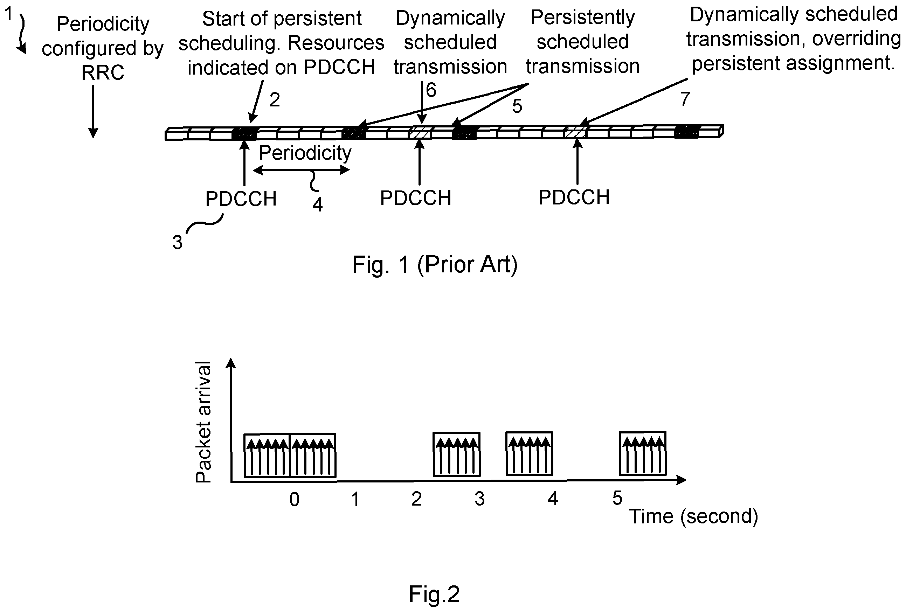

Figure 1 illustrates an example of semi-persistent scheduling. The periodicity of semi-persistent scheduling is thus configured 1 by RRC configuration signaling. Arrow 2 indicates the start point of the semi-persistent scheduling; in particular the special scheduling decision given in the PDCCH 3 indicates this start point and indicates that the allocation is a semi-persistent one. Transmission is then done with the specified periodicity 4, which in the illustrated case is every fifth subframe. The dynamic PDCCH grant/assignment 6 can override, or take precedence over, the semi-persistent grant/assignment. That is, a dynamically scheduled transmission 7 overrides the semi-persistent assignments 5 in the sense that the data scheduled to be sent on the semi-persistent subframe is sent on the dynamic grant/assignment 6, possibly along with additional data since the dynamic grant/assignment typically allows for more data to be sent than the semi-persistent grant/assignment, although it is also possible that the dynamic grant can be smaller than the semi-persistent grant.

There are two methods to stop semi-persistent scheduling transmissions, implicitRelease and explicitRelease. ImplicitRelease is configured by RRC signaling when configuring semi-persistent scheduling in uplink and it allows a communication device to stop transmission after at least two empty service data units (SDUs), i.e. after a number of protocol data units (PDUs) not containing any SDUs have been transmitted. ExplicitRelease is sent either through PDCCH as a special grant or assignment to order the communication device to stop semi-persistent transmissions or explicitRelease is requested with an RRC reconfiguration to release the semi-persistent scheduling resource.

After enabling semi-persistent scheduling in a particular subframe, the communication device continues to monitor the PDCCH for uplink and downlink scheduling commands. When a dynamic scheduling command is detected, it takes precedence over the semi-persistent scheduling in that particular subframe, which is useful if the semi-persistently allocated resources occasionally need to be increased. For example, for voice over IP in parallel with web browsing it may be useful to override the semi-persistent resource allocation with a larger transport block (as provided by the dynamic scheduling) when downloading the web page.

In reality many types of traffic arrives in bursts, an example of which comprises on-line gaming. Within one burst there are many packets arriving in one or several consecutive subframes; and between different bursts, there is much longer Inter Burst Arrival Time (IBAT). Figure 2 illustrates an example of such scenario. In this example, there are five packets (indicated by arrows) arrived in consecutive subframes (indicated by rectangles), and between different bursts the duration (IBAT) can vary a lot.

The schemes, dynamic and semi-persistent scheduling, provided by LTE 3GPP, are not always efficient, for example in such traffic scenario as illustrated in figure 2. In dynamic scheduling PDCCH resources are most likely wasted, because it requires a PDCCH grant or assignment to be sent at each scheduling decision. In semi-persistent scheduling there are several problems. A first problem is that the semi-persistent scheduling scheme is mainly designed for VoIP type of traffic where the packet inter-arrival time is 20ms and thus the minimum periodicity of transmissions supported in semi-persistent scheduling is with 10ms granularity. Hence, consecutive transmission on subframe basis is not supported, which basically excludes the use of semi-persistent scheduling for bursty traffic (i.e. traffic of the type illustrated in figure 2). Another problem of the semi-persistent scheduling is that the stopping scheme, which is either based on implicitRelease or explicitRelease, is not effective. In some cases a network node, e.g. evolved Node B (eNB), would prefer continuous transmissions in the coming subframes even though there is no data in the buffer at the current subframe so implicitRelease is not applicable for this case. One example of such case is the prescheduling where the eNB will pre-allocate resources to reduce the delay caused by scheduling request even though the communication device does not have data to transmit. The latency improvement is achieved at the cost of possibly wasted resources. With explicitRelease, the eNB has the freedom to stop semi-persistent transmission at any time, but the special PDCCH grant or assignment is needed. Using PDCCH resources to frequently stopping semi-persistent scheduling causes unnecessary overhead and defeats the purpose of using semi-persistent scheduling in the first place. Also, it is very hard for the eNB to know that the special grant or assignment is really received by the communication device and hence that the semi-persistent transmission is successfully released before scheduling other communication devices to use this resource.

US 2011/105136 A1 discloses a system where a particular component carrier may be allocated for semi-persistent scheduling.

WO 2008/155372 A1 teaches skipping retransmission when it would collide with a predefined resource.

### Summary

An object of the present teachings is to solve or at least alleviate at least one of the above mentioned problems. The invention is defined by the subject-matter of the independent claims. Advantageous embodiments are subject to the dependent claims.

The object is achieved by the various embodiments described herein, the embodiments describing methods in network nodes and methods in communication devices, and also network nodes, communication devices, function modules and/or software modules configured to perform various tasks/steps.

The object is according to a first aspect achieved by a method performed in a network node for scheduling a communication device. The method comprises:
- transmitting, to the communication device, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device, transmitting to the communication device, an acknowledgment or a negative acknowledgment, one of which indicates to the communication device to stop the retransmission and continue with the semi-persistent transmission as configured, and the other one of which indicates to the communication device to perform the retransmissions and skipping the coming semi-persistent transmission.

The method provides a scheduling scheme enabling a group of consecutive transmissions with one scheduling resource, in particular one grant in case of uplink transmission and one assignment in case of downlink transmission. Bursty traffic may thereby be scheduled with semi-persistent scheduling, which requires little scheduling resources and this limited resource is thus saved. The network node is further able to decide whether the communication device would benefit from a retransmission or not, or if it would be more advantageous to send next semi-persistent scheduling transmission instead.

The object is according to a second aspect achieved by a network node for scheduling a communication device. The network node comprises a processor and memory, the memory containing instructions executable by the processor, whereby the network node is operative to:
- transmit, to the communication device, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device, transmit, to the communication device, an acknowledgment or a negative acknowledgment, one of which indicates to the communication device to stop the retransmission and continue with the semi-persistent transmission as configured, and the other one of which indicates to the communication device to perform the retransmissions and skipping the coming semi-persistent transmission.

The object is according to a third aspect achieved by computer program for a network node for scheduling a communication device. The computer program comprises computer program code, which, when run on the network node causes the network node to:
- transmit, to the communication device, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device, transmit, to the communication device, an acknowledgment or a negative acknowledgment, one of which indicates to the communication device to stop the retransmission and continue with the semi-persistent transmission as configured, and the other one of which indicates to the communication device to perform the retransmissions and skipping the coming semi-persistent transmission.

The object is according to a fourth aspect achieved by computer program product comprising a computer program as above and a computer readable means on which the computer program is stored.

The object is according to a fifth aspect achieved by method performed in a communication device enabled for communication with a network node. The method comprises:
- receiving, from the network node, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- performing transmissions to the network node in accordance with the semi-persistent scheduling as configured by the configuration message.
- upon receiving, from the network node, an acknowledgment or a negative acknowledgment relating to a hybrid automatic repeat request, one of which indicates to the communication device to stop the retransmission and continue with the semi-persistent transmission as configured, and the other one of which indicates to the communication device to perform the retransmissions and skipping the coming semi-persistent transmission, stopping the retransmission and continue with the semi-persistent transmission as configured, or performing the retransmissions and skipping the coming semi-persistent transmission.

The object is according to a sixth aspect achieved by communication device enabled for communication with a network node. The communication device comprising a processor and memory, the memory containing instructions executable by the processor, whereby the communication device is operative to:
- receive, from the network node, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- perform transmissions to the network node in accordance with the semi-persistent scheduling as configured by the configuration message, and
- upon receiving, from the network node, an acknowledgment or a negative acknowledgment relating to a hybrid automatic repeat request, one of which indicates to the communication device to stop the retransmission and continue with the semi-persistent transmission as configured, and the other one of which indicates to the communication device to perform the retransmissions and skipping the coming semi-persistent transmission, stop the retransmission and continue with the semi-persistent transmission as configured, or performing the retransmissions and skipping the coming semi-persistent transmission.

The object is according to a seventh aspect achieved by computer program for a communication device enabled for communication with a network node. The computer program comprises computer program code, which, when run on the communication device causes the communication device to:
- receive, from the network node, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- perform transmissions to the network node in accordance with the semi-persistent scheduling as configured by the configuration message, and
- upon receiving, from the network node, an acknowledgment or a negative acknowledgment relating to a hybrid automatic repeat request, one of which indicates to the communication device to stop the retransmission and continue with the semi-persistent transmission as configured, and the other one of which indicates to the communication device to perform the retransmissions and skipping the coming semi-persistent transmission, stop the retransmission and continue with the semi-persistent transmission as configured, or performing the retransmissions and skipping the coming semi-persistent transmission.

The object is according to a eight aspect achieved by computer program product comprising a computer program as above and a computer readable means on which the computer program is stored. Features and advantages of the present teachings will become clear upon reading the following description and the accompanying drawings.

### Brief description of the drawings

Figure 1 illustrates an example of semi-persistent scheduling.
Figure 2 illustrates a bursty traffic scenario.
Figure 3 illustrates an example of semi-persistent scheduling pattern in an aspect of the present teachings.
Figure 4 illustrates a prior art solution for retransmissions.
Figure 5 illustrates, in an aspect of the present teachings, a solution for feedback transmission.
Figure 6 illustrates a prior art solution, wherein only one on-going semi-persistant instance is allowed.
Figure 7 illustrates, in an aspect of the present teachings, a solution allowing several on-going semi-persistent transmission instances.
Figure 8 illustrates an example of a semi-persistent scheduling with implicit release in an aspect of the present teachings.
Figure 9 illustrates an example of a semi-persistent scheduling with implicit release in an aspect of the present teachings.
Figure 10 illustrates an example of a semi-persistent scheduling with implicit release in an aspect of the present teachings.
Figure 11 illustrates an example of a semi-persistent scheduling with implicit release in an aspect of the present teachings.
Figure 12 illustrates schematically an environment in which embodiments of the present teachings may be implemented.
Figures 13 and 14 illustrate flow charts over steps of methods in a network node in accordance with the present teachings.
Figure 15 illustrates schematically a network node and means for implementing methods of the present teachings.
Figure 16 illustrates a network node comprising functions modules/software modules for implementing methods of the present teachings.
Figure 17 illustrates a flow chart over steps of a method in a communication device in accordance with the present teachings.
Figure 18 illustrates schematically a communication device and means for implementing methods of the present teachings.
Figure 19 illustrates a communication device comprising functions modules/software modules for implementing methods of the present teachings.

### Detailed description

Briefly, in an aspect of the present teachings, a new method is provided with which a scheduler can schedule a communication device consecutively in a limited period of time using a single allocation. This may be based on that a network node, for example an evolved node B (eNB), has knowledge of the traffic pattern which knowledge is used in the scheduling. An extended semi-persistent scheduling capability is provided to enable a consecutive allocation with a PDCCH grant or assignment to further save the PDCCH resource utilization. In case the eNB decodes an error of a semi-persistent transmission, the eNB can either send negative acknowledgment (NACK) letting the communication device postpone the SPS transmission and send the retransmission or the eNB may send an acknowledgment (NACK) to allow the communication device to send the SPS transmission and skip (or postpone) the retransmission. The other way around may also be implemented, i.e. sending ACK for postponing transmission and NACK for allowing transmission. In different embodiments, the communication device may continue with semi-persistent transmission (if it is applicable) when the retransmission has been done. The present teachings are applicable for both uplink and downlink semi-persistent scheduling.

Furthermore, by introducing, in various embodiments, different types of implicit release schemes, it is possible to stop persistent transmission in a controllable way but at the same time with a large freedom. In the prior art implicit release, the minimum number of empty SDUs that the 3GPP LTE standards allow is 2, which restricts the application of semi-persistent scheduling in some cases where a faster release of semi-persistent scheduling would be needed. This problem is overcome by the present teachings that provide various embodiments enabling flexible release of semi-persistent scheduling resources. The present teachings allow for 1 empty SDU triggering implicit release and multiple semi-persistent processes are allowed simultaneously.

In accordance with the present teachings, an extended semi-persistent scheduling is used for enabling a consecutive transmission which is more efficient for example for the scenario described in relation to Figure 2.

Traffic pattern knowledge can be obtained by for example traffic pattern prediction. Such traffic pattern prediction can for example be based on historical traffic data, comprising for example off-line statistics from the field and/or on-line traffic data. For example, if a certain traffic pattern is recognized for a particular type of traffic, this traffic pattern data can be used in training a model for use in traffic pattern prediction. Furthermore, in downlink it is also possible to shape the traffic so that the consecutive transmission pattern is obtained and is known to the eNB .

The eNB sends RRC signaling and configures the communication device with the necessary parameters used by semi-persistent scheduling. The currently existing configuration has an information element (IE) called *SPS-Config,* which is used for specifying the semi-persistent scheduling configuration. In various embodiments of the present teachings, this IE *SPS-Config* is extended.

In an embodiment, the valid ranges of the parameters, semiPersistSchedIntervalDL and semiPersistSchedIntervalUL, respectively, are extended to allow per subframe basis semi-persistent scheduling periodicity.

An example of the current configuration in 3GPP 36.331 is as below:

```
 semiPersistSchedIntervalDL
                               ENUMERATED {
                                                 sf10, sf20, sf32, sf40, sf64, sf8
                                                 sf128, sf160, sf320, sf640, spare6,
                                                 spares, spare4, spare3, spare2,
                                                 spare1},
```

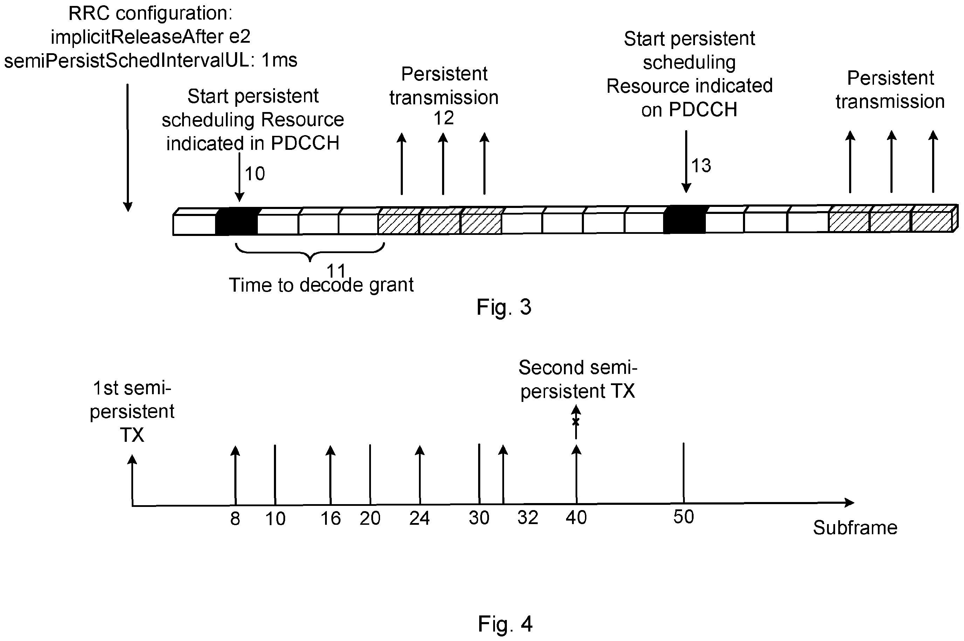

The current minimum semi-persistent scheduling periodicity is thus sf10 (10 subframes), meaning that every 10 subframes the transmission is scheduled. The semi-persistent scheduling was initially designed in view of traffic of the VoIP type, for which the periodicity of at least 10 subframes is a suitable choice. Further, the choice of a periodicity of at least 10 subframes was also made in view of allowing the round trip time (RTT) required by Hybrid Automatic repeat request (HARQ) processes. The HARQ round trip time is defined so that the time difference between the transmission and the feedback of the transmission is 8ms. By limiting the periodicity of the semi-persistent scheduling to be larger than HARQ RTT, the implementation can be simplified so that only one active semi-persistent scheduling process is needed and collisions between an SPS transmission and retransmission is unlikely. This is elaborated on a bit more with reference to figures 4, 5, 6 and 7.

The current IE *SPS-Config* further provides "spare6 - spare 1", which are spared bits reserved for further usage. In various embodiments of the present teachings, one or more of e.g. sf1, sf2, sf3, sf4, sf5, sf6, sf7, sf8, sf9 is introduced with these spare bits to allow the periodicity of semi-persistent scheduling with a periodicity equal to every 1 subframe (i.e. consecutive subframes), every 2 subframes or every 3 subframes and so on.

Another difference compared to the current configuration is that embodiments of the present teachings allow more than one semi-persistent process to be active simultaneously. This is important to make sure that repetitions (according to HARQ processes) of the multiple consecutive transmissions can be performed Further, allowing more than one semi-persistent process to be active also allows more advanced patterns of semi-persistent scheduling, an example of which is illustrated in figure 3. In particular, referring to figure 3, the semi-persistent scheduling starts (reference numeral 10), and a resource is indicated in the PDCCH grant. Then there is sufficient time (reference numeral 11) for the communication device to decode the grant transmitted on the PDCCH, after which the communication device starts its transmission in the semi-persistent scheduling resource (reference numeral 12). Then a second group of consecutive transmissions (reference numeral 14) is triggered by another semi-persistent scheduling grant (reference numeral 13). The communication device thus has two active semi-persistent processes simultaneously.

The prior art solution in which 10 ms is the minimum semi-persistent scheduling periodicity is illustrated in figure 4. In particular, the earliest collision instance between retransmission and a semi-persistant instance will be the 5^{th} retransmission (40 ms). Since the gain of retransmission at 5^{th} retransmission is limited, 3GPP specified that when retransmission and new semi-persistent transmission collide, the communication device is to skip retransmission and transmit semi-persistent new transmission. Further, given this prior art periodicity, collisions between SPS transmissions and retransmissions are not occurring often.

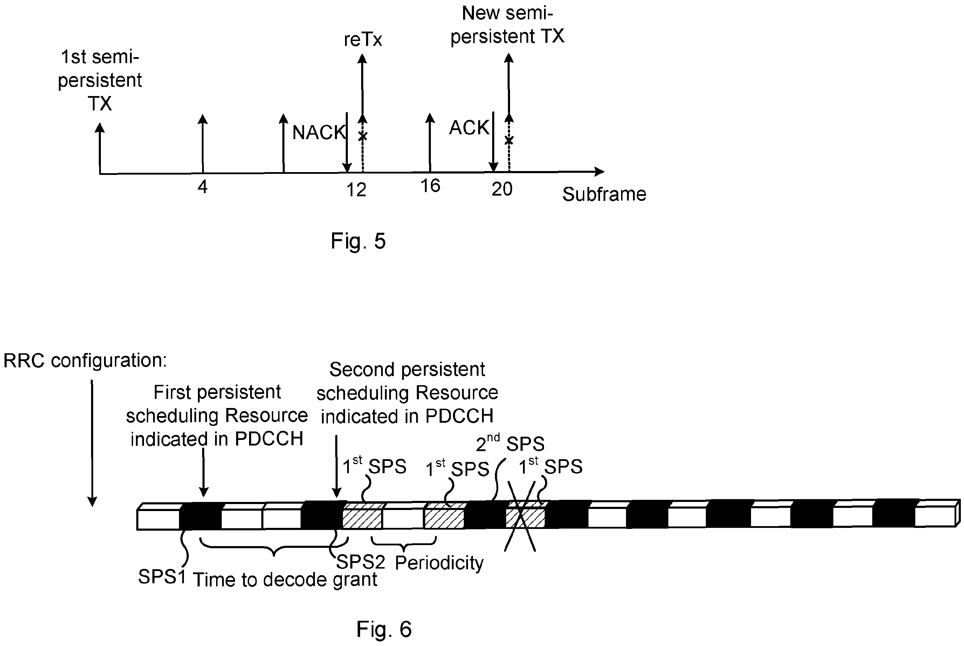

In order to handle collisions, which will be more likely and even unavoidable when the shorter periodicity of the SPS transmissions is introduced, the present teachings instead gives the eNB freedom in that is can control either to transmit retransmission by sending an NACK or to continue transmitting a new semi-persistent transmission by sending an ACK in the HARQ feedback. Figure 5 illustrates this. In particular, after three semi-persistent transmissions, the communication device receives a NACK from the eNB, and therefore skips the 4^{th} semi-persistent transmission and instead performs a retransmission. Then the communication device transmits a fourth semi-persistent transmission as scheduled, receives an ACK from the eNB at a point of time just before 20 ms (time implicitly indicated along x-axis as subframes are indicated) and thus transmits its scheduled semi-persistent transmissions. If, for example, the communication device has a good enough quality of service (QoS) the eNB can choose to continue the semi-persistent scheduling transmission and ignore the retransmission. If the gain (e.g. based on number of transmission accounts) that can be obtained by a retransmission is sufficient, then the eNB may choose to let the communication device go on with the retransmission (thus postponing the SPS transmission).

Figure 6 illustrates a prior art solution, wherein only one on-going semi-persistent instance is allowed. In particular, in 3GPP it is specified that if a communication device that has an on-going first semi-persistent scheduling instance (the grant indicated at SPS1) receives a second semi-persistent scheduling instance (the grant indicated at SPS2), then the communication device is to release the first semi-persistent scheduling instance. That is, upon receiving the grant for the first semi-persistent scheduling instance, there is some time for it to decode the grant before a first transmission (transmissions denoted 1^{st} SPS) on the semi-persistent scheduling instance is to be sent. The communication device performs two transmissions on the first semi-persistent scheduling instance, before it has decoded the grant for the second semi-persistent scheduling instance. The third transmission on the first semi-persistent scheduling instance is therefore aborted (crossed over transmission in the figure), and the communication device now transmits according to the grant for the second semi-persistent scheduling instance.

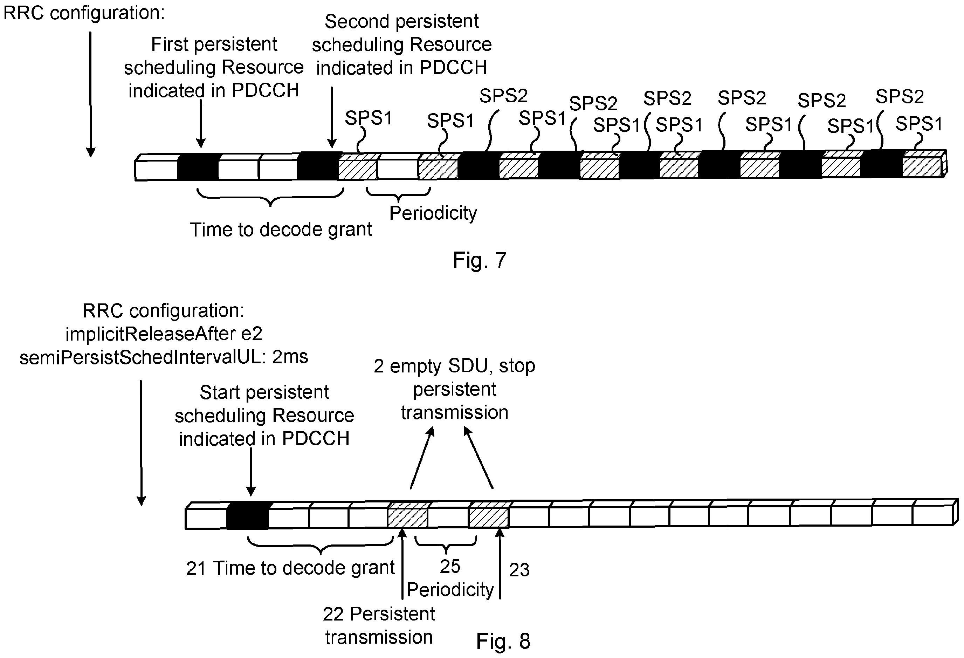

Figure 7 illustrates, in an aspect of the present teachings, a solution allowing multiple on-going semi-persistent transmission instances. In figure 7, the communication device receives the periodicity of semi-persistent scheduling resources in RRC signaling. The communication device receives a grant for a first semi-persistent scheduling instance indicated in the PDCCH, and as described above, and has a certain time to decode the grant before its first transmission is due. Further, the communication device receives a grant for a second semi-persistent scheduling instance. The transmissions on the first semi-persistent scheduling instance are indicated by SPS1 and the transmissions on the second semi-persistent scheduling instance are indicated by SPS2. These multiple (two in this case) semi-persistent scheduling instances running simultaneously is made possible owing to the introduction of the shorter periodicity (as described earlier) and owing to the fact that the eNB is given freedom to control the retransmission scheme (in a manner that has been described earlier, e.g. in relation to figure 5). Thus, in the current standard an ongoing HARQ retransmission can be interrupted if the next new SPS transmissions happen to coincide with a HARQ retransmission. In contrast, in accordance with the present teachings an ongoing HARQ retransmission can continue if needed (by sending a NACK), or the next new SPS transmission can be continued as scheduled.

To summarize figures 4, 5, 6 and 7, the current standards only allow one semi-persistent scheduling instance with its on-going Hybrid Automatic Repeat request (HARQ) process(es). If the current traffic type requires more scheduled resources within a shorter period of time, then SPS cannot be used and dynamic scheduling may be used instead, with its entailing drawbacks of wasted PDCCH resources. In contrast, the present teachings allow the use of SPS even for bursty type of traffic, by introducing a semi-persistent scheduling periodicity that is smaller than HARQ RTT. With this new periodicity, the risk of collisions increases compared to prior art.

According to current standards, the minimum periodicity allowed for a SPS is 10 subframes, this SPS having on-going HARQ-process(es). The risk of collisions between a retransmission and a SPS transmission is low, and should it still happen then the communication device is to skip the retransmission, this being motivated by the gain of performing a 5^{th} retransmission being rather low. However, when implementing a SPS periodicity allowing e.g. consecutive subframes then multiple HARQ processes would be needed and collisions would be more likely to occur, such collisions even being unavoidable. Prior art would then, as mentioned, provide the solution of using dynamic scheduling, which would result in high PDCCH consumption.

In an aspect of the present teachings, as mentioned earlier (also refer to figures 4 and 5), retransmissions in semi-persistent scheduling are provided for. Since the semi-persistent scheduling periodicity is reduced to less than 8ms, it is possible and more likely that a retransmission coincides with a new semi-persistent transmission opportunity. This is handled by allowing the eNB to decide if a retransmission is to be done or not. The consecutive semi-persistent scheduling transmission can thus be done without knowing the decoding results of the previous transmission. In case a HARQ retransmission is colliding with a new semi-persistent scheduling instance, the eNB can control the semi-persistent transmissions in a flexible way, as described earlier. Figures 6 and 7 and related text provide comparison between prior art solution and solutions according to the present teachings.

These collisions can thus be handled in different ways in accordance with the present teachings. In an embodiment, if a retransmission coincides with a new semi-persistent transmission, then the eNB is allowed to control whether the communication device shall perform retransmission or semi-persistent transmission by sending HARQ indication ACK or NACK. When the eNB sends ACK, the communication device is going to stop the retransmission and continue with the semi-persistent transmission previously configured and eNB prepares decoding according to the semi-persistent transmission accordingly. When the eNB sends NACK to the communication device, the communication device is going to perform the retransmissions, and the new semi-persistent transmission is postponed. The eNB will decode the corresponding transmission according to the retransmission.

As a particular example, if the eNB prefers the communication device to carry out a colliding retransmission, it sends a NACK. The communication device then retransmits, and consequently is unable to transmit regular data in the semi-persistently scheduled resource, as that resource is now used by the retransmission. In such situation the eNB may, in addition to the NACK, also send a dynamic grant, overriding the semi-persistent scheduling. Thereby the transmission of regular semi-persistent data may continue as planned, however in a dynamically scheduled resource instead of the semi-persistently scheduled resource. Both the retransmission and semi-persistent transmission may be carried out without cancellation or interruption. This is possible if there are more than 1 HARQ process supported simultaneously per TTI, which is the case for e.g. Single-User Multiple-input, multiple-output (SU-MIMO) enabled communication device, where one HARQ process is used for 1 codeword. However, in case of single HARQ process, it is necessary to either cancel or postpone the retransmission and continue with the semi-persistent scheduling or to continue with retransmission but pend the semi-persistent transmission since the communication device has to use the HARQ process to store the transmitted data. However, if there are two HARQ processes, one code word transport block (TB) could be retransmitted and the new semi-persistent transmission could be continued for another code word.

Further, in various embodiments of the configuration of semi-persistent scheduling a new type of implicit release criteria may be introduced which specifies that after n subframes the semi-persistent scheduling transmissions are stopped. In contrast to the known implicit release criteria, wherein the communication device stops transmitting after x number of empty SDUs, this new type of implicit release criteria offers a greater freedom in setting the implicit release criteria. The new type of implicit criteria may be done for both uplink and downlink semi-persistent scheduling configuration.

An example showing implicitRelease for the current uplink semi-persistent scheduling configuration is as below:

```
 implicitReleaseAfter ENUMERATED {e2, e3, e4, e8},
```

where for example e2 indicates that after 2 empty SDUs, the communication device is going to stop its semi-persistent transmissions.

Figure 8 illustrates an example of implicitReleaseAfter 2 empty SDUs. In accordance with the present teachings, the implicit release may be done after m number of empty SDUs. The RRC configuration message sent to the communication device is thus, in the illustrated case, to release the semi-persistent scheduling after having sent two empty SDUs. The semi-persistent scheduling starts (reference numeral 20), and a resource is indicated in PDCCH carrying the grant. There is sufficient time for the communication device to decode the grant transmitted on the PDCCH (reference numeral 21). Two semi-persistent transmissions are then sent (reference numerals 22 and 23). As the transmissions were empty SDUs, the semi-persistently scheduled resources are stopped (reference numeral 24). It is to be noted in the illustrated example that the periodicity (reference numeral 25) of the semi-persistent scheduled resources have a periodicity of sf2, i.e. the RRC configuration allows the semi-persistent scheduling to have a periodicity equal to every other subframes (i.e. every 2 subframes), which is not allowed by the current standard.

In an aspect of the present teachings, yet another new type of implicitReleaseType2After is introduced, for example t2,t3,t4,t8, to indicate that after 2, 3, 4, or 8 subframes, respectively, have been scheduled as triggered by the semi-persistent scheduling for the same PDCCH grant, the transmissions are stopped. That is, a single PDCCH grant triggers the indicated number of transmissions, and when the indicated number of transmissions have been effectuated the transmissions stop.

A configuration example is as below, but it is noted that the present teachings are not restricted to these values:

```
 implicitReleaseType2After ENUMERATED {t2, t3, t4, t8},
```

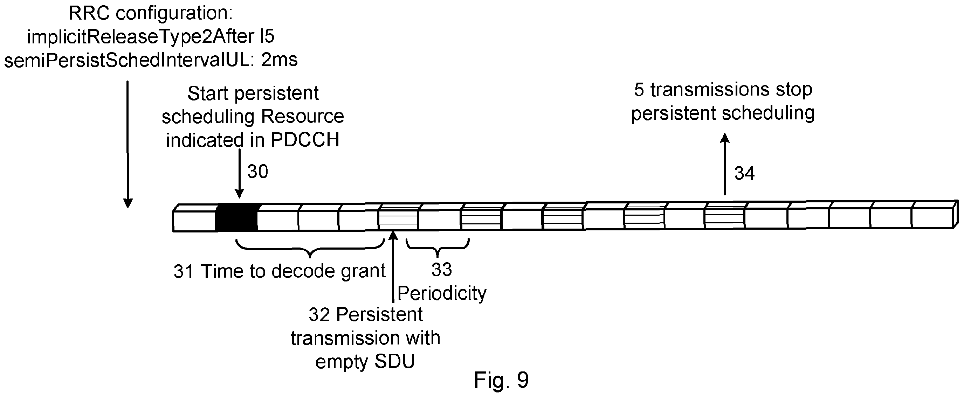

Figure 9 shows an example of a semi-persistent scheduling according to the above, with implicitReleaseType2After 5 subframes that are intended for the PDCCH grant. The RRC configuration thus comprises implicitReleaseType2After having value 5. The semi-persistent scheduling starts (reference numeral 30), and a resource is indicated in PDCCH. There is sufficient time for the communication device to decode the grant transmitted on the PDCCH (reference numeral 31). A semi-persistent transmission is then sent (reference numeral 32). The transmission may be an empty SDU or a non-empty SDU, but the semi-persistently scheduled resources are stopped in either case after 5 transmissions (reference numeral 34). It is also to be noted in the illustrated example that the periodicity (reference numeral 33) of the semi-persistent scheduled resources have a periodicity of sf2, i.e. the RRC configuration allows the semi-persistent scheduling to have a periodicity equal to every 2 subframes.

It is also possible to combine the two implicit release schemes so that the transmission can be stopped in both cases, i.e., n number of transmissions or m number of empty SDUs, where n and m are configured through RRC configuration, for example as defined in implicitReleaseType3After. Two parameters are then configured; "tn" indicates that the semi-persistent transmission will be stopped after n number of transmissions and if the total number of empty SDU is smaller than m; if there is m or more than m number of empty SDU received, the semi-persistent transmission will be stopped independent of the count of the transmissions.

```
 implicitReleaseType3After ENUMERATED {t2, t3, t4, t8; e2, e3, e4, e8},
```

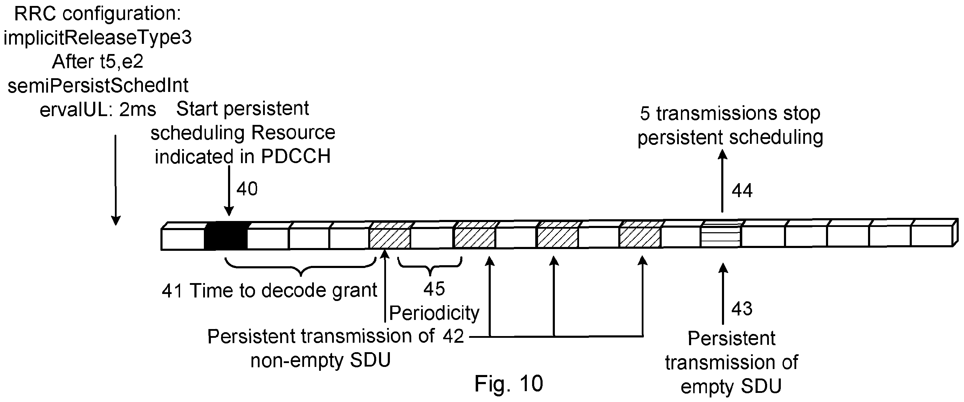

Figure 10 shows an example of semi-persistent scheduling configured with implicitReleaseType3After t5 and e2. In particular, the RRC configuration thus comprises implicitReleaseType3After having values t5 and e2. The semi-persistent scheduling starts (reference numeral 40), and a resource is indicated in PDCCH.

There is sufficient time for the communication device to decode the grant transmitted on the PDCCH (reference numeral 41). Four semi-persistent transmission that are non-empty are then sent (reference numeral 42) followed by a semi-persistent transmission of an empty SDU (reference numeral 43). The semi-persistently scheduled resources are stopped (reference numeral 44) after 5 transmissions since only one empty SDU occurs in the five consecutive transmissions, thus stopping transmission when fulfilling t5 and as the number of empty SDUs is smaller than 2 the stopping criterion e2 is not fulfilled. It is also to be noted in the illustrated example that the periodicity (reference numeral 45) of the semi-persistent scheduled resources have a periodicity of sf2, i.e. the RRC configuration allows the semi-persistent scheduling to have a periodicity equal to every 2 subframes.

Another alternative is to stop transmissions either after n number of transmissions or after m number of empty SDUs which are received after a reception of non-empty SDU, where n and m is configured through RRC configuration, for example defined in implicitReleaseType4After with the parameters "tn" and "em" :

```
 implicitReleaseType4After ENUMERATED {t2, t3, t4, t8; e2, e3, e4, e8},
```

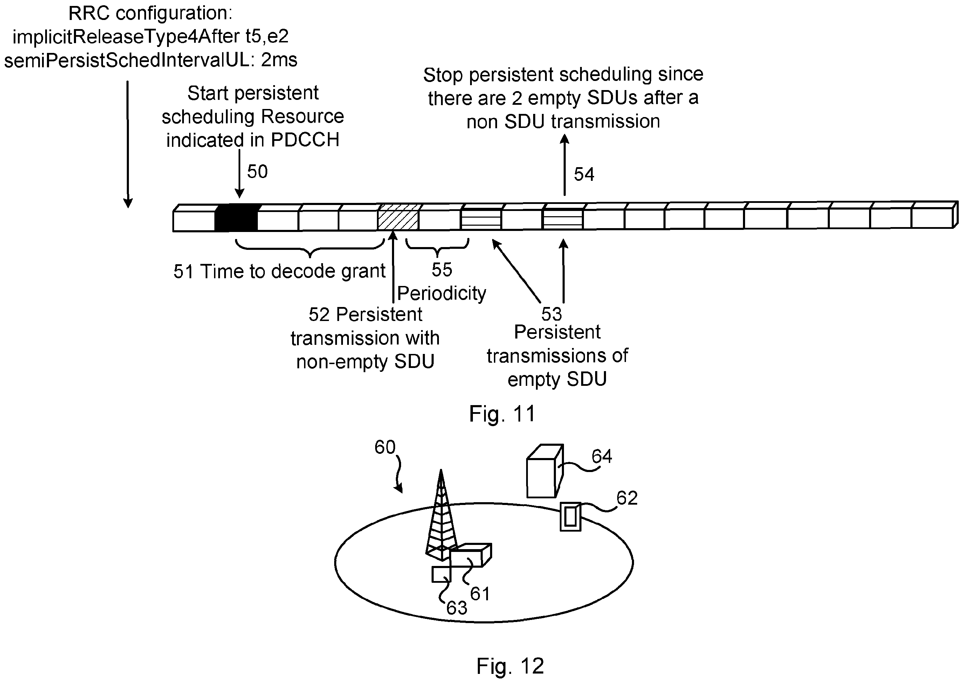

Figure 11 shows one example of semi-persistent scheduling with imiplicitReleaseType4after t5 and e2. In particular, the RRC configuration thus comprises implicitReleaseType4After having values t5 and e2. The semi-persistent scheduling starts (reference numeral 50), and a resource is indicated in PDCCH. There is sufficient time for the communication device to decode the grant transmitted on the PDCCH (reference numeral 51). One semi-persistent transmission that is non-empty is then sent (reference numeral 52) followed by two semi-persistent transmissions of empty SDUs (reference numeral 53). The semi-persistently scheduled resources are stopped (reference numeral 54) after 2 empty SDUs (which in this case follows a non-SDU transmission), thus fulfilling the number of empty SDUs being 2 as required by e2. It is also to be noted in the illustrated example that the periodicity (reference numeral 55) of the semi-persistent scheduled resources have again a periodicity of sf2, i.e. the RRC configuration allows the semi-persistent scheduling to have a periodicity equal to every 2 subframes.

After signaling the RRC semi-persistent scheduling configuration containing the above changes to the communication device, the communication device will send RRC reconfiguration complete message. When the eNB receives the reconfiguration complete message, it understands that the communication device has successfully reconfigured the semi-persistent scheduling with the desired configuration.

Whenever a traffic burst arrives in the buffer for/of a communication device which will result in consecutive packet transmission, eNB can send a special grant or assignment that contain the information of desired allocation, i.e. PRB (Physical Resource Block), MCS (Modulation and Coding Scheme), TBS (Transport Block Size) to enable the semi-persistent scheduling. In reception of the grant or assignment, the communication device will start the semi-persistent transmissions in the resources (PRB, MCS and TBS) specified in the PDCCH request, and with a periodicity specified in the RRC configuration of semiPersistSchedIntervalUL for UL or semiPersistSchedIntervalDL for DL, and for a period of time specified in RRC configuration implicitReleaseType2After. When implicitReleaseType3After or implicitReleaseType4After is configured it is also possible to stop transmissions according to the rule in this configuration (in accordance with what has been described earlier). The actual rules of different type of combinations are examples and are not limited by the present teachings. The actual name of the RRC IE, implicitReleaseTypeXAfter, is just an example and the present teachings is not restricted to this name and includes all possible ways in which implicit release can be configured according to case X.

The traffic pattern is known in eNB for downlink, and for uplink it can be obtained by traffic pattern prediction.

In order to enable a faster implicit release, in an embodiment of the present teachings the release of the semi-persistent scheduling is implemented with one empty SDU by adding the value "e1" to the implicitReleaseAfter information element in RRC:

```
 implicitReleaseAfter ENUMERATED {e1, e2, e3, e4, e8},
```

Figure 12 illustrates schematically an environment in which embodiments of the present teachings may be implemented. A communication network 60, and in particular an LTE network, comprises a number of network nodes 61, e.g. eNBs (also denoted e Node B), serving communication devices 62. The communication device 62, often also denoted user equipment (UE), may be any communication device enabled to communicate wirelessly with the eNB 61, for example a smart phone. The communication network 60 also comprises a scheduling device 63, also denoted scheduler, which may be part of the eNB 61, or may be connected to the eNB 61, or may be a stand-alone unit, or may even be distributed among several entities. The scheduler 63 is configured to schedule transmissions over the LTE air interface in both the downlink and uplink directions, i.e. to and from the communication device 62. The communication network 60 may also comprise further network nodes, such as for example Mobility Management Entity/Serving GateWay (MME/S-GW) 64 and yet additional nodes, not illustrated or described herein.

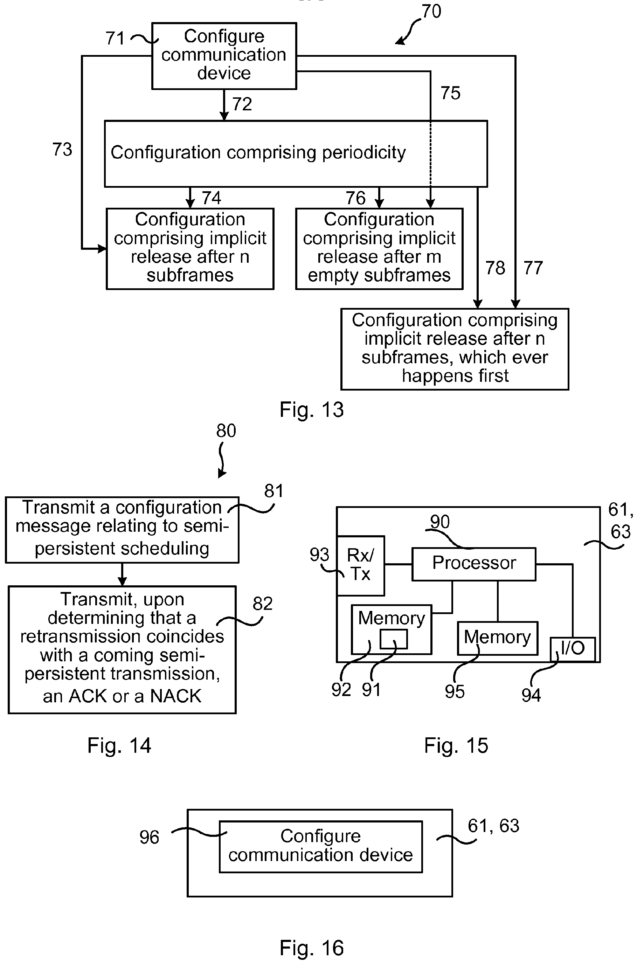

Figure 13 illustrates a flow chart over steps of a method in a network node, such as the scheduler 63 or eNB 61, in accordance with the present teachings. The method 70 for scheduling a communication device 62 of a communication network 60 comprises:
- configuring 71 the communication device 62 for semi-persistent scheduling, the configuring indicating a periodicity of the semi-persistent scheduling to be equal to every 1 subframe (i.e. consecutive subframes), every 2 subframes, every 3 subframes, every 4 subframes, every 5 subframes, every 6 subframes, every 7 subframes, every 8 subframes or every 9 subframes. This configuring of periodicity is indicated by arrow 72 of figure 13, although not being a separate step, but illustrating what the configuration indicates.

The configuring may be done by transmitting a configuration message to the communication device 62, e.g. in a RRC signaling, the configuration message comprising an information element indicating the periodicity.

The information element may comprise information element *SPS-Config* of 3GPP standard, and the indication may be made by using one or more of the "spare6, spares, spare4, spare3, spare2, spare 1" of the *SPS-Config.* Alternatively, the information element may comprise *SPS-Config* of 3GPP standard, and in particular parameters semiPersist SchedIntervalDL set to sf1, sf2, sf3, sf4, sf5, sf6, sf7, sf8 or sf9. Alternatively, the information element may comprise *SPS-Config* of 3GPP standard, and in particular parameters semiPersist SchedIntervalUL set to sf1, sf2, sf3, sf4, sf5, sf6, sf7, sf8 or sf9.

The method 70 may alternatively (arrow 73) or additionally (arrow 74) comprise configuring the communication device 62 for semi-persistent scheduling, wherein the configuring indicates an implicit release criteria, the release criteria specifying to stop the semi-persistent scheduling transmissions after n transmissions, the transmissions comprising empty and/or non-empty service data units, SDUs. The configuring may comprise transmitting a configuration message comprising an information element indicating the implicit release criteria. The information element may define the number n by a parameter tn, sent in RRC signaling in *SPS-Config* of 3GPP standard, n being the number of transmissions. The information element may comprise SPS-Config of 3GPP standard, and in particular parameter implicit ReleaseAfter set to t2, t3, t4, t5, t6, t7, t8, t9 or t10. This configuring can be used for uplink and/or downlink.

The method 70 may alternatively (arrow 75) or additionally (arrow 76) comprise configuring the communication device 62 for semi-persistent scheduling, the configuring indicating an implicit release criteria, the release criteria specifying to stop the semi-persistent scheduling transmissions after m transmissions, the transmissions comprising empty service data units, SDUs. The configuring may comprise transmitting a configuration message comprising an information element indicating the implicit release criteria. The information element may comprise *SPS-Config* of 3GPP standard, and in particular a parameter implicit ReleaseAfter set to e1, e2, e3, e4, e5, e6, e7, e8, e9 or e10. This configuring can be used for uplink and/or downlink.

The method 70 may alternatively (arrow 77) or additionally (arrow 78) comprise configuring a communication device for semi-persistent scheduling, the configuring indicating implicit release criteria, the implicit release criteria specifying to stop the semi-persistent scheduling transmissions after m transmissions when m transmissions empty service data units, SDUs, have been transmitted, and the release criteria further specifying to stop the semi-persistent scheduling transmissions after n subframes, when n empty or non-empty service data units, SDUs, have been transmitted. That is, the transmission is stopped after a total of m empty SDUs or after n transmissions, whichever happens first, i.e. whichever criteria is fulfilled first. The information element may comprise *SPS-Config* of 3GPP standard, and in particular a parameter implicit ReleaseAfter set to t1, t2, t3, t4, t5, t6, t7, t8, t9 or t10; e1, e2, e3, e4, e5, e6, e7, e8, e9 or e10.

In an embodiment, the method 70 comprises configuring HARQ, such configuration comprising for example the number of HARQ processes and/or maximal number of retransmissions. The actual HARQ procedure is done in lower layer. In particular, in the HARQ procedure, it is determined that a retransmission coincides with a coming semi-persistent transmission for a particular communication device.

The method 70 may further comprise a hybrid automatic repeat request, HARQ, procedure for transmissions to and from the communication device 62, the method 70 comprising, after the configuring 71:
- determining that a retransmission coincides with a coming semi-persistent transmission for a communication device,
- transmitting, to the communication device, an acknowledgment, ACK, or a negative acknowledgment, NACK, the transmission of an acknowledgment, ACK, indicating to the communication device to stop the retransmission and continue with the semi-persistent transmission previously configured, and the transmission of a negative acknowledgment, NACK, indicating to the communication device to perform the retransmissions and skipping the coming semi-persistent transmission.

It is noted that the acknowledgment could be used for indicating to the communication device to perform the retransmissions and skip the coming semi-persistent transmission, and that the negative acknowledgment then could be used for indicating to the communication device to stop the retransmission and continue with the semi-persistent transmission previously configured.

The network node 61, 63 may further be configured to decode a corresponding transmission according to the retransmission. That is, the method 70 may comprise the additional step of decoding a retransmission or a new semi-persistent transmission.

The HARQ procedure is not illustrated in figure 13, but can be included for all the above (and other) embodiments.

The method 70 may further comprise receiving a RRC reconfiguration complete message from the communication device 62. Such RRC reconfiguration complete message is sent by the communication device 62 after having received signaling of the RRC semi-persistent scheduling configuration containing the above changes to the communication device. When the network node 61, 63 receives the reconfiguration complete message, it understands that the communication device 62 has successfully reconfigured the semi-persistent scheduling with the desired configuration.

Figure 14 is a flow chart of steps of a method 80 performed in a network node 61, 63 for scheduling a communication device 62. The method 80 comprises:
- transmitting 81, to the communication device 62, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device 62, transmitting 82, to the communication device 62, an acknowledgment or a negative acknowledgment, one of which indicates to the communication device 62 to stop the retransmission and continue with the semi-persistent transmission as configured, and the other one of which indicates to the communication device 62 to perform the retransmissions and skipping the coming semi-persistent transmission.

The above is a simplified description. In particular, the configuration message is transmitted through RRC signaling, which the communication device will reply to with an RRC configuration complete message informing the network node that the configuration message was received successfully. Then, the network node will send scheduling grant to the communication device, to initiate the semi-persistent scheduling, upon which the communication device starts the semi-persistent transmission. In reception of the uplink transmission, the network node will perform decoding and in case the decoded result is retransmission, the network node will decide whether or not to retransmit or continue with new transmission.

In an embodiment, the transmission of the acknowledgment indicates to the communication device 62 to stop the retransmission and continue with the semi-persistent transmission previously configured, and the transmission of the negative acknowledgment, indicates to the communication device 62 to perform the retransmissions and skip the coming semi-persistent transmission.

In an embodiment, the method 80 comprises transmitting, to the communication device 62, a grant for an additional semi-persistent scheduling instance. The communication device 62 is thus scheduled with two semi-persistent scheduling instances.

In an embodiment, the method 80 comprises configuring the communication device 62 for semi-persistent scheduling, the configuring indicating an implicit release criterion. The release criterion specify to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

The ongoing semi-persistent scheduling may thus be stopped in various ways, which makes the semi-persistent scheduling more flexible for use in many different traffic scenarios.

In a variation of the above embodiment, the method comprises triggering the implicit release criteria by transmitting a single grant.

In an embodiment, the scheduling periodicity is based on traffic pattern prediction, the prediction in turn being based on historical and/or current traffic data.

It is to be noted that the various features that has been described may be combined in many ways, also in ways not explicitly stated herein. For example, the various parameter settings can be combined in different ways; e.g. the parameter settings for the periodicity and the parameter settings of the various implicit release schemes may be combined in a number of different ways, all of which are encompassed by the present teachings.

Figure 15 illustrates schematically a network node 61, 63 and means for implementing methods of the present teachings. The network node 61, 63 comprises a processor 90 comprising any combination of one or more of a central processing unit (CPU), multiprocessor, microcontroller, digital signal processor (DSP), application specific integrated circuit etc. capable of executing software instructions stored in a memory 92, which can thus be a computer program product 92. The processor 90 can be configured to execute e.g. any of the various embodiments of the method as described in relation to figure 13 or figure 14.

In particular, the network node 61, 63 for scheduling a communication device 62comprises a processor 90 and memory 92, the memory 91 containing instructions executable by the processor 90, whereby the network node 61, 63 is operative to:
- transmit, to the communication device 62, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device 62, transmit, to the communication device 62, an acknowledgment or a negative acknowledgment, one of which indicates to the communication device 62 to stop the retransmission and continue with the semi-persistent transmission as configured, and the other one of which indicates to the communication device 62 to perform the retransmissions and skipping the coming semi-persistent transmission.

In an embodiment, the transmission of the acknowledgment indicates to the communication device 62 to stop the retransmission and continue with the semi-persistent transmission previously configured, and the transmission of the negative acknowledgment, indicates to the communication device 62 to perform the retransmissions and skip the coming semi-persistent transmission.

In an embodiment, the network node 61, 63 is configured to transmit, to the communication device 62, a grant for an additional semi-persistent scheduling instance.

In an embodiment, the network node 61, 63 is configured to configure the communication device 62 for semi-persistent scheduling, the configuring indicating an implicit release criterion, the release criterion specifying to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

In a variation of the above embodiment, the network node 61, 63 is configured to trigger the implicit release criteria by transmitting a single grant.

In an embodiment, the scheduling periodicity is based on traffic pattern prediction, the prediction in turn being based on historical and/or current traffic data.

The network node 61, 63 comprises various other components, such as one or more receiving and transmitting devices 93 (only one illustrated) for receiving/transmitting wireless signaling. The receiving and transmitting device 93 may encompass components such as receiving/transmitting circuitry, and be connected to antennas, antenna ports etc. The network node 61, 63 typically further comprises one or more input/output devices 94, e.g. for communication with other network nodes.

Still with reference to figure 15, the memory 92 can be any combination of read and write memory (RAM) and read only memory (ROM). The memory 92 also comprises persistent storage, which, for example, can be any single one or combination of magnetic memory, optical memory, solid state memory or even remotely mounted memory.

A data memory 95 may also be provided for reading and/or storing data during execution of software instructions in the processor 90. The data memory 95 can be any combination of read and write memory (RAM) and read only memory (ROM).

The teachings of the present application also encompasses a computer program product 92 comprising a computer program 91 for implementing the methods as has been described, and a computer readable means on which the computer program 91 is stored. The computer program product 92 may be any combination of read and write memory (RAM) or read only memory (ROM). The computer program product 92 may also comprise persistent storage, which for example can be any single one or combination of magnetic memory, optical memory or solid state memory.

The present teachings thus also comprise a computer program 91 for a network node 61, 63 as has been described. The computer program 91 comprises computer program code, which, when run on the network node 61, 63 causes the network node 61, 63 to perform e.g. the described method 70 or 80.

In particular, a computer program 91 for a network node 61, 63 is provided for scheduling a communication device 62. The computer program 91 comprises computer program code, which, when run on the network node 61, 63 causes the network node 61, 63 to:
- transmit, to the communication device 62, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device 62, transmit, to the communication device 62, an acknowledgment or a negative acknowledgment, one of which indicates to the communication device 62 to stop the retransmission and continue with the semi-persistent transmission as configured, and the other one of which indicates to the communication device 62 to perform the retransmissions and skipping the coming semi-persistent transmission.

The present teachings also encompasses a computer program product 92 comprising a computer program 91 as described above, and a computer readable means on which the computer program 91 is stored.

The computer program product 91, or the memory 91, thus comprises instructions executable by the processor 90. Such instructions may be comprised in a computer program 91, or in one or more software modules or function modules.

An example of an implementation using functions modules is illustrated in figure 16, in particular illustrating the network node 61, 63 comprising functions modules for implementing methods of the present teachings. The network node comprises means, in particular a first function module 96, for configuring the communication device 62. Additional function modules may be provided, corresponding e.g. to the functions illustrated in figure 13 and described in the corresponding description. Such additional function modules are illustrated at reference numerals 97, 98, 99, the dots of the figure indicating that there may be still further such function modules.

As a particular example, the network node 61, 63 comprises means, in particular a first function module for transmitting, to the communication device 62, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes. The network node 61, 63 comprises means, in particular a second function module for, upon determining that a retransmission coincides with a coming semi-persistent transmission for the communication device 62, transmitting, to the communication device 62, an acknowledgment or a negative acknowledgment, one of which indicates to the communication device 62 to stop the retransmission and continue with the semi-persistent transmission as configured, and the other one of which indicates to the communication device 62 to perform the retransmissions and skipping the coming semi-persistent transmission.

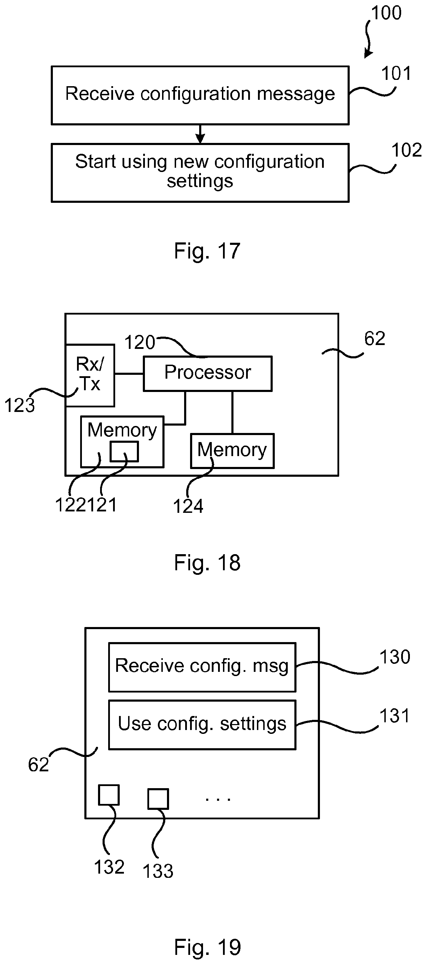

Figure 17 illustrates a flow chart over steps of a method 100 in a communication device 62 in accordance with the present teachings. The method 100, performed in the communication device 62, comprises receiving 101 from the network node 61, 63 a configuration message. The configuration message is typically conveyed in RRC signaling, as described earlier. The configuration message, particularly relating to semi-persistent scheduling, comprises the earlier described parameters, e.g. parameters setting the periodicity and implicit release, and the description of the particularities of the configuration messages and parameters are not repeated here. The method 100 also comprises the communication device 62 start using 102 the received configurations in forthcoming transmissions (i.e. in forthcoming communication). The communication device 62 is now communicating using the new parameters, and is configured to communicate in accordance therewith.

The communication device 62 is thus adapted to perform a new type of semi-persistent scheduling, wherein e.g. the periodicity is every 2 subframes or even consecutive subframes, and/or wherein the communication device is adapted to handle the implicit release criterion of counting the total number of transmissions before stopping the transmission, and/or the total number of empty transmissions.

In particular, a method performed in a communication device 62 which is enabled for communication with a network node 61, 63 is provided. The method 100 comprises:
- receiving 101, from the network node 61, 63, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- performing 102 transmissions to the network node 61, 63 in accordance with the semi-persistent scheduling as configured by the configuration message.
- upon receiving, from the network node 61, 63, an acknowledgment or a negative acknowledgment relating to a hybrid automatic repeat request, one of which indicates to the communication device 62 to stop the retransmission and continue with the semi-persistent transmission as configured, and the other one of which indicates to the communication device 62 to perform the retransmissions and skipping the coming semi-persistent transmission, stopping the retransmission and continue with the semi-persistent transmission as configured, or performing the retransmissions and skipping the coming semi-persistent transmission.

In an embodiment, the method 100 comprises receiving, from the network node 61, 63, a grant for an additional semi-persistent scheduling instance.

In an embodiment, the method 100 comprises receiving, from the network node 61, 63, a configuration message indicating an implicit release criterion, the release criterion specifying to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

In a variation of the above embodiment, the method 100 comprises receiving, from the network node 61, 63 a single grant triggering the implicit release criteria.

Figure 18 illustrates schematically a communication device 62 and means for implementing methods of the present teachings. The communication device 62 comprises a processor 120 comprising any combination of one or more of a central processing unit (CPU), multiprocessor, microcontroller, digital signal processor (DSP), application specific integrated circuit etc. capable of executing software instructions stored in a memory 122, which can thus be a computer program product 122. The processor 120 can be configured to execute e.g. any of the various embodiments of the method 100 as described in relation to figure 17.

In particular, the communication device 62 enabled for communication with a network node 61, 63 is provided. The communication device 62 comprises a processor 120 and memory 122, the memory 122 containing instructions executable by the processor 120, whereby the communication device 62 is operative to:
- receive, from the network node 61, 63, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- perform transmissions to the network node 61, 63 in accordance with the semi-persistent scheduling as configured by the configuration message, and
- upon receiving, from the network node 61, 63, an acknowledgment or a negative acknowledgment relating to a hybrid automatic repeat request, one of which indicates to the communication device 62 to stop the retransmission and continue with the semi-persistent transmission as configured, and the other one of which indicates to the communication device 62 to perform the retransmissions and skipping the coming semi-persistent transmission, stop the retransmission and continue with the semi-persistent transmission as configured, or performing the retransmissions and skipping the coming semi-persistent transmission.

In an embodiment, the communication device 62 is configured to receive, from the network node 61, 63, a grant for an additional semi-persistent scheduling instance.

In an embodiment, the communication device 62 is configured to receive, from the network node 61, 63, a configuration message indicating an implicit release criterion, the release criterion specifying to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

In a variation of the above embodiment, the communication device 62 is configured to receive, from the network node 61, 63 a single grant triggering the implicit release criteria.

The communication device 62 comprises various other components, such as one or more receiving and transmitting devices 123 (only one illustrated) for receiving/transmitting wireless signaling. The receiving and transmitting device 123 may encompass components such as receiving/transmitting circuitry, and be connected to antennas etc. The communication device 62 typically further comprises further components, such as analog/digital converters, display, amplifiers etc. but such components are not illustrated nor described herein.

Still with reference to figure 18, the memory 122 can be any combination of read and write memory (RAM) and read only memory (ROM). The memory 122 also comprises persistent storage, which, for example, can be any single one or combination of magnetic memory, optical memory, solid state memory or even remotely mounted memory.

A data memory 124 may also be provided for reading and/or storing data during execution of software instructions in the processor 120. The data memory 124 can be any combination of read and write memory (RAM) and read only memory (ROM).

The teachings of the present application also encompasses a computer program product 122 comprising a computer program 121 for implementing the methods as has been described, and a computer readable means on which the computer program 121 is stored. The computer program product 122 may be any combination of read and write memory (RAM) or read only memory (ROM). The computer program product 122 may also comprise persistent storage, which for example can be any single one or combination of magnetic memory, optical memory or solid state memory.

A computer program 121 is provided for a communication device 62 enabled for communication with a network node 61, 63. The computer program 121 comprises computer program code, which, when run on the communication device 62 causes the communication device 62 to:
- receive, from the network node 61, 63, a configuration message relating to semi-persistent scheduling, the configuration message comprising an information element indicating a periodicity of the semi-persistent scheduling, wherein the information element has a value within a range of values in which range at least one value corresponds to: a periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- perform transmissions to the network node 61, 63 in accordance with the semi-persistent scheduling as configured by the configuration message, and
- upon receiving, from the network node 61, 63, an acknowledgment or a negative acknowledgment relating to a hybrid automatic repeat request, one of which indicates to the communication device 62 to stop the retransmission and continue with the semi-persistent transmission as configured, and the other one of which indicates to the communication device 62 to perform the retransmissions and skipping the coming semi-persistent transmission, stop the retransmission and continue with the semi-persistent transmission as configured, or performing the retransmissions and skipping the coming semi-persistent transmission.

The teachings also encompasses the computer program product 122 comprising a computer program 121 as above and a computer readable means on which the computer program 121 is stored.

The present teachings thus also comprise a computer program 121 for a communication device 62 as has been described. The computer program 121 comprises computer program code, which, when run on the communication device 62 causes the communication device 62 to perform the described method 100.

The computer program product 121, or the memory 121, thus comprises instructions executable by the processor 120. Such instructions may be comprised in a computer program 121, or in one or more software modules or function modules.

An example of an implementation using functions modules is illustrated in figure 19, in particular illustrating the communication device 62 comprising functions modules for implementing methods of the present teachings. The communication device 62 comprises means, in particular a first function module 130, for receiving configuration messages from the network node 61, 62. Additional function modules may be provided, corresponding e.g. to the functions illustrated in figure 17 and described in the corresponding description. Such additional function modules are illustrated at reference numerals 132, 133, the dots of the figure indicating that there may be still further such function modules.

The present teachings thus, as is evident from the description, provide a number of advantages compared to prior art. A new semi-persistent scheduling scheme is provided which enables a group of consecutive transmissions with one scheduling PDCCH resource: one grant in case of UL transmission, or one assignment in case of DL transmission. The PDCCH resource which is typically a limited resource is thereby saved. The provided semi-persistent scheduling scheme can be used for many scenarios, such as pre-scheduling, video services or traffic shaping where multiple transmissions is needed at the consecutive transmission time intervals (TTIs). The scheduler 63 has the freedom to schedule the transmission in a controllable way.

Further, the present teachings also introduces more ways to control the stopping of ongoing semi-persistent scheduling transmissions, and this makes the semi-persistent scheduling more flexible to use in many scenarios.

Further still, the present teachings allow HARQ retransmission to have precedence over new semi-persistent transmissions.

## Claims

1. A method (80) performed in a network node (61, 63) for scheduling a communication device (62), wherein the scheduling is for bursty traffic, the method (80) comprising:
- when a traffic burst arrives in a buffer for, or of, the communication device, transmitting (81), to the communication device (62), a configuration message relating to semi-persistent scheduling, the configuration message comprising an information element indicating a periodicity of the semi-persistent scheduling, wherein the information element has a value which corresponds to the periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device (62), transmitting (82), to the communication device (62), an acknowledgement or a negative acknowledgement one of which indicates to the communication device (62) to stop the retransmission and continue with the semi-persistent transmission as configured, and the other one of which indicates to the communication device (62) to perform the retransmission and skip the coming semi-persistent transmission.

2. The method (80) as claimed in claim 1, wherein the transmission of the acknowledgment indicates to the communication device to stop the retransmission and continue with the semi-persistent transmission previously configured, and the transmission of the negative acknowledgement, indicating to the communication device (62) to perform the retransmission and skip the coming semi-persistent transmission.

3. The method (80) as claimed in claim 1 or 2, comprising transmitting, to the communication device (62), a grant for an additional semi-persistent scheduling instance.

4. The method (80) as claimed in any of claims 1-3, comprising configuring the communication device (62) for the semi-persistent scheduling, the configuring indicating an implicit release criterion, the implicit release criterion specifying to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

5. The method (80) as claimed in claim 4, comprising triggering the implicit release criteria by transmitting a single grant.

6. The method (80) as claimed in any of the preceding claims, wherein the scheduling periodicity is based on traffic pattern prediction, the prediction in turn being based on historical and/or current traffic data.

7. A network node (61, 63) for scheduling a communication device (62), wherein the scheduling is for bursty traffic, the network node (61, 63) comprising a processor (90) and memory (92), the memory (91) containing instructions executable by the processor (90), whereby the network node (61, 63) is configured to:
- responsive to a traffic burst arriving in a buffer for, or of, the communication device, transmit, to the communication device (62), a configuration message relating to semi-persistent scheduling, the configuration message comprising an information element indicating a periodicity of the semi-persistent scheduling, wherein the information element has a value which corresponds to the periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device (62), transmit, to the communication device (62), an acknowledgement or a negative acknowledgement, one of which indicates to the communication device (62) to stop the retransmission and continue with the semi-persistent transmission as configured, and the other one of which indicates to the communication device (62) to perform the retransmission and skip the coming semi-persistent transmission.

8. A computer program (91) for a network node (61, 63) for scheduling a communication device (62), wherein the scheduling is for bursty traffic, the computer program (91) comprising computer program code, which, when run on the network node (61, 63) causes the network node (61, 63) to:
- responsive to a traffic burst arriving in a buffer for, or of, the communication device, transmit, to the communication device (62), a configuration message relating to semi-persistent scheduling, the configuration message comprising an information element indicating a periodicity of the semi-persistent scheduling, wherein the information element has a value which corresponds to the periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- upon determining that a retransmission coincides with a coming semi-persistent transmission for the communication device (62), transmit, to the communication device (62), an acknowledgement or a negative acknowledgement, one of which indicates to the communication device (62) to stop the retransmission and continue with the semi-persistent transmission as configured, and the other one of which indicates to the communication device (62) to perform the retransmission and skip the coming semi-persistent transmission.

9. A method (100) performed in a communication device (62) enabled for communication with a network node (61, 63), the method (100) comprising:
- when a traffic burst arrives in a buffer for, or of, the communication device, receiving (101), from the network node (61, 63), a configuration message relating to semi-persistent scheduling, wherein the semi-persistent scheduling is for bursty traffic, the configuration message comprising an information element indicating a periodicity of the semi-persistent scheduling, wherein the information element has a value which corresponds to the periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- performing (102) transmissions to the network node (61, 63) in accordance with the semi-persistent scheduling as configured by the configuration message.
- upon receiving, from the network node (61, 63), an acknowledgement or a negative acknowledgement relating to a hybrid automatic repeat request, one of which indicates to the communication device (62) to stop a retransmission and continue with the semi-persistent transmission as configured, and the other one of which indicates to the communication device (62) to perform the retransmission and skip the coming semi-persistent transmission, stopping the retransmission and continue with the semi-persistent transmission as configured, or performing the retransmission and skipping the coming semi-persistent transmission.

10. The method (100) as claimed in claim 9, comprising receiving, from the network node (61, 63), a grant for an additional semi-persistent scheduling instance.

11. The method (100) as claimed in claim 9 or 10, comprising receiving, from the network node (61, 63), the configuration message indicating an implicit release criterion, the implicit release criterion specifying to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

12. The method (100) as claimed in claim 11, comprising receiving, from the network node (61, 63) a single grant triggering the implicit release criteria.

13. A communication device (62) enabled for communication with a network node (61, 63), the communication device (62) comprising a processor (120) and memory (122), the memory (122) containing instructions executable by the processor (120), whereby the communication device (62) is configured to:
- responsive to a traffic burst arriving in a buffer for, or of, the communication device, receive, from the network node (61, 63), a configuration message relating to semi-persistent scheduling, wherein the semi-persistent scheduling is for bursty traffic, the configuration message comprising an information element indicating a periodicity of the semi-persistent scheduling, wherein the information element has a value which corresponds to the periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- perform transmissions to the network node (61, 63) in accordance with the semi-persistent scheduling as configured by the configuration message, and
- upon receiving, from the network node (61, 63), an acknowledgement or a negative acknowledgement relating to a hybrid automatic repeat request, one of which indicates to the communication device (62) to stop a retransmission and continue with the semi-persistent transmission as configured, and the other one of which indicates to the communication device (62) to perform the retransmission and skip the coming semi-persistent transmission, stop the retransmission and continue with the semi-persistent transmission as configured, or perform the retransmission and skip the coming semi-persistent transmission.

14. The communication device (62) as claimed in claim 13, the communication device (62) being configured to receive, from the network node (61, 63), the configuration message indicating an implicit release criterion, the release criterion specifying to stop the semi-persistent scheduling transmissions:
- after n transmissions, the transmissions comprising empty and/or non-empty service data units, n being an integer equal to or larger than 1, or
- after m transmissions, the transmissions comprising empty service data units, m being an integer equal to or larger than 1, or
- after m transmissions, the transmissions comprising empty service data units, or after n transmissions, the transmissions comprising empty and/or non-empty service data units, whichever happens first, wherein n and m are integers equal to or larger than 1.

15. A computer program (121) for a communication device (62) enabled for communication with a network node (61, 63), the computer program (121) comprising computer program code, which, when run on the communication device (62) causes the communication device (62) to:
- responsive to a traffic burst arriving in a buffer for, or of, the communication device, receive, from the network node (61, 63), a configuration message relating to semi-persistent scheduling, wherein the semi-persistent scheduling is for bursty traffic, the configuration message comprising an information element indicating a periodicity of the semi-persistent scheduling, wherein the information element has a value which corresponds to the periodicity of the semi-persistent scheduling equal to every 1 subframe, every 2 subframes, every 3 subframes, every 4 subframes, every 5 subframes, every 6 subframes, every 7 subframes, every 8 subframes or every 9 subframes, and
- perform transmissions to the network node (61, 63) in accordance with the semi-persistent scheduling as configured by the configuration message, and
- upon receiving, from the network node (61, 63), an acknowledgement or a negative acknowledgement relating to a hybrid automatic repeat request, one of which indicates to the communication device (62) to stop a retransmission and continue with the semi-persistent transmission as configured, and the other one of which indicates to the communication device (62) to perform the retransmission and skip the coming semi-persistent transmission, stop the retransmission and continue with the semi-persistent transmission as configured, or perform the retransmission and skip the coming semi-persistent transmission.

## Patentansprüche

1. Verfahren (80), das in einem Netzknoten (61, 63) zum Planen einer Kommunikationsvorrichtung (62) durchgeführt wird, wobei die Planung für schubweisen Verkehr erfolgt, wobei das Verfahren (80) Folgendes umfasst:
- wenn ein Verkehrsschub in einen Puffer für die Kommunikationsvorrichtung oder der Kommunikationsvorrichtung gelangt, Übertragen (81) einer Konfigurationsnachricht in Bezug auf semi-persistente Planung an die Kommunikationsvorrichtung (62), wobei die Konfigurationsnachricht ein Informationselement umfasst, das eine Periodizität der semi-persistenten Planung angibt, wobei das Informationselement einen Wert entsprechend der Periodizität der semi-persistenten Planung aufweist gleich aller 1 Unterrahmen, aller 2 Unterrahmen, aller 3 Unterrahmen, aller 4 Unterrahmen, aller 5 Unterrahmen, aller 6 Unterrahmen, aller 7 Unterrahmen, aller 8 Unterrahmen oder aller 9 Unterrahmen, und
- bei der Bestimmung, dass eine erneute Übertragung mit einer kommenden semi-persistenten Übertragung für die Kommunikationsvorrichtung (62) zusammenfällt, Übertragen (82) einer Bestätigung oder einer negativen Rückmeldung an die Kommunikationsvorrichtung (62), von denen eine der Vorrichtung (62) angibt, dass die erneute Übertragung angehalten und mit der semi-persistenten Übertragung wie konfiguriert fortgefahren werden soll, und von denen die andere der Kommunikationsvorrichtung (62) angibt, dass die erneute Übertragung durchgeführt und die kommende semi-persistente Übertragung übersprungen werden soll.

2. Verfahren (80) nach Anspruch 1, wobei die Übertragung der Bestätigung der Kommunikationsvorrichtung angibt, dass die erneute Übertragung angehalten und mit der zuvor konfigurierten semi-persistenten Übertragung fortgefahren werden soll, und wobei die Übertragung der negativen Rückmeldung der Kommunikationsvorrichtung (62) angibt, die erneute Übertragung durchzuführen und die kommende semi-persistente Übertragung zu überspringen.

3. Verfahren (80) nach Anspruch 1 oder 2, das das Übertragen einer Genehmigung für eine zusätzliche semi-persistente Planungsinstanz an die Kommunikationsvorrichtung (62) umfasst.

4. Verfahren (80) nach einem der Ansprüche 1 bis 3, welches das Konfigurieren der Kommunikationsvorrichtung (62) für die semi-persistente Planung umfasst, wobei die Konfiguration ein implizites Freigabekriterium angibt, wobei das implizite Freigabekriterium spezifiziert, dass die semi-persistenten Planungsübertragungen angehalten werden sollen:
- nach n Übertragungen, wobei die Übertragungen leere und/oder nicht leere Dienstdateneinheiten umfassen, wobei n eine Ganzzahl gleich oder größer als 1 ist, oder
- nach m Übertragungen, wobei die Übertragungen leere Dienstdateneinheiten umfassen, wobei m eine Ganzzahl gleich oder größer als 1 ist, oder
- nach m Übertragungen, wobei die Übertragungen leere Dienstdateneinheiten umfassen, oder nach n Übertragungen, wobei die Übertragungen leere und/oder nicht leere Dienstdateneinheiten umfassen, je nachdem, was zuerst erfolgt, wobei n und m Ganzzahlen gleich oder größer als 1 sind.

5. Verfahren (80) nach Anspruch 4, umfassend das Auslösen der impliziten Freigabekriterien durch Senden einer einzelnen Genehmigung.

6. Verfahren (80) nach einem der vorhergehenden Ansprüche, wobei die Planungsperiodizität auf einer Verkehrsmustervorhersage basiert, wobei die Vorhersage wiederum auf historischen und/oder aktuellen Verkehrsdaten basiert.

7. Netzknoten (61, 63) zur Planung einer Kommunikationsvorrichtung (62), wobei die Planung für schubweisen Verkehr erfolgt, wobei der Netzknoten (61, 63) einen Prozessor (90) und einen Speicher (92) umfasst, wobei der Speicher (91) Anweisungen enthält, die durch den Prozessor (90) ausführbar sind, wodurch der Netzknoten (61, 63) für Folgendes konfiguriert wird:
- Übertragen einer Konfigurationsnachricht in Bezug auf semi-persistente Planung an die Kommunikationsvorrichtung (62) als Reaktion auf einen Verkehrsschub, der in einen Puffer für die Kommunikationsvorrichtung oder der Kommunikationsvorrichtung gelangt, wobei die Konfigurationsnachricht ein Informationselement umfasst, das eine Periodizität der semi-persistenten Planung angibt, wobei das Informationselement einen Wert entsprechend der Periodizität der semi-persistenten Planung aufweist gleich aller 1 Unterrahmen, aller 2 Unterrahmen, aller 3 Unterrahmen, aller 4 Unterrahmen, aller 5 Unterrahmen, aller 6 Unterrahmen, aller 7 Unterrahmen, aller 8 Unterrahmen oder aller 9 Unterrahmen, und
- bei der Bestimmung, dass eine erneute Übertragung mit einer kommenden semi-persistenten Übertragung für die Kommunikationsvorrichtung (62) zusammenfällt, Übertragen einer Bestätigung oder einer negativen Rückmeldung an die Kommunikationsvorrichtung (62), von denen eine der Vorrichtung (62) angibt, dass die erneute Übertragung angehalten und mit der semi-persistenten Übertragung wie konfiguriert fortgefahren werden soll, und von denen die andere der Kommunikationsvorrichtung (62) angibt, dass die erneute Übertragung durchgeführt und die kommende semi-persistente Übertragung übersprungen werden soll.

8. Computerprogramm (91) für einen Netzknoten (61, 63) zur Planung einer Kommunikationsvorrichtung (62), wobei die Planung für schubweisen Verkehr ist, wobei das Computerprogramm (91) Computerprogrammcode umfasst, der, wenn er auf dem Netzknoten (61, 63) ausgeführt wird, den Netzknoten (61, 63) zu Folgendem veranlasst:
- Übertragen einer Konfigurationsnachricht in Bezug auf semi-persistente Planung an die Kommunikationsvorrichtung (62) als Reaktion auf einen Verkehrsschub, der in einen Puffer für die Kommunikationsvorrichtung oder der Kommunikationsvorrichtung gelangt, wobei die Konfigurationsnachricht ein Informationselement umfasst, das eine Periodizität der semi-persistenten Planung angibt, wobei das Informationselement einen Wert entsprechend der Periodizität der semi-persistenten Planung aufweist gleich aller 1 Unterrahmen, aller 2 Unterrahmen, aller 3 Unterrahmen, aller 4 Unterrahmen, aller 5 Unterrahmen, aller 6 Unterrahmen, aller 7 Unterrahmen, aller 8 Unterrahmen oder aller 9 Unterrahmen, und
- bei der Bestimmung, dass eine erneute Übertragung mit einer kommenden semi-persistenten Übertragung für die Kommunikationsvorrichtung (62) zusammenfällt, Übertragen einer Bestätigung oder einer negativen Rückmeldung an die Kommunikationsvorrichtung (62), von denen eine der Vorrichtung (62) angibt, dass die erneute Übertragung angehalten und mit der semi-persistenten Übertragung wie konfiguriert fortgefahren werden soll, und von denen die andere der Kommunikationsvorrichtung (62) angibt, dass die erneute Übertragung durchgeführt und die kommende semi-persistente Übertragung übersprungen werden soll.

9. Verfahren (100), das in einer Kommunikationsvorrichtung (62) ausgeführt wird, die zur Kommunikation mit einem Netzknoten (61, 63) freigegeben ist, wobei das Verfahren (100) umfasst:
- Empfangen (101) einer Konfigurationsnachricht in Bezug auf semi-persistente Planung ausgehend vom Netzknoten (61, 63), wenn ein Verkehrsschub in einen Puffer für die Kommunikationsvorrichtung oder der Kommunikationsvorrichtung gelangt, wobei die semi-persistente Planung für schubweisen Verkehr erfolgt, wobei die Konfigurationsnachricht ein Informationselement umfasst, das eine Periodizität der semi-persistenten Planung angibt, wobei das Informationselement einen Wert entsprechend der Periodizität der semi-persistenten Planung aufweist gleich aller 1 Unterrahmen, aller 2 Unterrahmen, aller 3 Unterrahmen, aller 4 Unterrahmen, aller 5 Unterrahmen, aller 6 Unterrahmen, aller 7 Unterrahmen, aller 8 Unterrahmen oder aller 9 Unterrahmen, und
- Durchführen (102) von Übertragungen an den Netzknoten (61, 63) gemäß der semi-persistenten Planung, wie durch die Konfigurationsnachricht konfiguriert.
- Anhalten der erneuten Übertragung und Fortführen der semi-persistenten Übertragung wie konfiguriert, oder Durchführen der erneuten Übertragung und Überspringen der kommenden semi-persistenten Übertragung, beim Empfangen einer Bestätigung oder einer negativen Rückmeldung ausgehend vom Netzknoten (61, 63) in Bezug auf eine hybride automatische Wiederholungsanforderung, von denen eine der Kommunikationsvorrichtung (62) angibt, dass eine erneute Übertragung angehalten und die semi-persistente Übertragung fortgeführt werden soll, und von denen die andere der Kommunikationsvorrichtung (62) angibt, dass die erneute Übertragung durchgeführt werden und die kommende semi-persistente Übertragung übersprungen werden soll.

10. Verfahren (100) nach Anspruch 9, das das Empfangen einer Genehmigung für eine zusätzliche semi-persistente Planungsinstanz von dem Netzknoten (61, 63) umfasst.

11. Verfahren (100) nach Anspruch 9 oder 10, umfassend das Empfangen der Konfigurationsnachricht, die ein implizites Freigabekriterium anzeigt, ausgehend vom Netzknoten (61, 63), wobei das implizite Freigabekriterium spezifiziert, dass die semi-persistenten Planungsübertragungen angehalten werden sollen:
- nach n Übertragungen, wobei die Übertragungen leere und/oder nicht leere Dienstdateneinheiten umfassen, wobei n eine Ganzzahl gleich oder größer als 1 ist, oder
- nach m Übertragungen, wobei die Übertragungen leere Dienstdateneinheiten umfassen, wobei m eine Ganzzahl gleich oder größer als 1 ist, oder
- nach m Übertragungen, wobei die Übertragungen leere Dienstdateneinheiten umfassen, oder nach n Übertragungen, wobei die Übertragungen leere und/oder nicht leere Dienstdateneinheiten umfassen, je nachdem, was zuerst erfolgt, wobei n und m Ganzzahlen gleich oder größer als 1 sind.

12. Verfahren (100) nach Anspruch 11, das das Empfangen einer einzelnen Genehmigung ausgehend vom Netzknoten (61, 63) umfasst, die die impliziten Freigabekriterien auslöst.

13. Kommunikationsvorrichtung (62), die zur Kommunikation mit einem Netzknoten (61, 63) freigegeben ist, wobei die Kommunikationsvorrichtung (62) einen Prozessor (120) und einen Speicher (122) umfasst, wobei der Speicher (122) Anweisungen enthält, die durch den Prozessor (120) ausführbar sind, wobei die Kommunikationsvorrichtung (62) konfiguriert ist zum:
- Empfangen einer Konfigurationsnachricht in Bezug auf semi-persistente Planung ausgehend vom Netzknoten (61, 63) als Reaktion auf einen Verkehrsschub, der in einen Puffer für die Kommunikationsvorrichtung oder der Kommunikationsvorrichtung gelangt, wobei die semi-persistente Planung für schubweisen Verkehr ist, wobei die Konfigurationsnachricht ein Informationselement umfasst, das eine Periodizität der semi-persistenten Planung angibt, wobei das Informationselement einen Wert entsprechend der Periodizität der semi-persistenten Planung aufweist gleich aller 1 Unterrahmen, aller 2 Unterrahmen, aller 3 Unterrahmen, aller 4 Unterrahmen, aller 5 Unterrahmen, aller 6 Unterrahmen, aller 7 Unterrahmen, aller 8 Unterrahmen oder aller 9 Unterrahmen, und
- Durchführen von Übertragungen an den Netzknoten (61, 63) gemäß der semi-persistenten Planung, wie durch die Konfigurationsnachricht konfiguriert, und
- Anhalten der erneuten Übertragung und Fortführen der semi-persistenten Übertragung wie konfiguriert, oder Durchführen der erneuten Übertragung und Überspringen der kommenden semi-persistenten Übertragung, beim Empfangen einer Bestätigung oder einer negativen Rückmeldung ausgehend vom Netzknoten (61, 63) in Bezug auf eine hybride automatische Wiederholungsanforderung, von denen eine der Kommunikationsvorrichtung (62) angibt, dass eine erneute Übertragung angehalten und die semi-persistente Übertragung fortgeführt werden soll, und von denen die andere der Kommunikationsvorrichtung (62) angibt, dass die erneute Übertragung durchgeführt werden und die kommende semi-persistente Übertragung übersprungen werden soll.

14. Kommunikationsvorrichtung (62) nach Anspruch 13, wobei die Kommunikationsvorrichtung (62) konfiguriert ist, um vom Netzknoten (61, 63) die Konfigurationsnachricht zu empfangen, die ein implizites Freigabekriterium angibt, wobei das Freigabekriterium spezifiziert, dass die semi-persistenten Planungsübertragungen angehalten werden sollen:
- nach n Übertragungen, wobei die Übertragungen leere und/oder nicht leere Dienstdateneinheiten umfassen, wobei n eine Ganzzahl gleich oder größer als 1 ist, oder
- nach m Übertragungen, wobei die Übertragungen leere Dienstdateneinheiten umfassen, wobei m eine Ganzzahl gleich oder größer als 1 ist, oder
- nach m Übertragungen, wobei die Übertragungen leere Dienstdateneinheiten umfassen, oder nach n Übertragungen, wobei die Übertragungen leere und/oder nicht leere Dienstdateneinheiten umfassen, je nachdem, was zuerst erfolgt, wobei n und m Ganzzahlen gleich oder größer als 1 sind.

15. Computerprogramm (121) für eine Kommunikationsvorrichtung (62), die zur Kommunikation mit einem Netzknoten (61, 63) freigegeben ist, wobei das Computerprogramm (121) Computerprogrammcode umfasst, der, wenn er auf der Kommunikationsvorrichtung (62) ausgeführt wird, die Kommunikationseinrichtung (62) zu Folgendem veranlasst:
- Empfangen einer Konfigurationsnachricht in Bezug auf semi-persistente Planung ausgehend vom Netzknoten (61, 63) als Reaktion auf einen Verkehrsschub, der in einen Puffer für die Kommunikationsvorrichtung oder der Kommunikationsvorrichtung gelangt, wobei die semi-persistente Planung für schubweisen Verkehr ist, wobei die Konfigurationsnachricht ein Informationselement umfasst, das eine Periodizität der semi-persistenten Planung angibt, wobei das Informationselement einen Wert entsprechend der Periodizität der semi-persistenten Planung aufweist gleich aller 1 Unterrahmen, aller 2 Unterrahmen, aller 3 Unterrahmen, aller 4 Unterrahmen, aller 5 Unterrahmen, aller 6 Unterrahmen, aller 7 Unterrahmen, aller 8 Unterrahmen oder aller 9 Unterrahmen, und
- Durchführen von Übertragungen an den Netzknoten (61, 63) gemäß der semi-persistenten Planung, wie durch die Konfigurationsnachricht konfiguriert, und
- Anhalten der erneuten Übertragung und Fortführen der semi-persistenten Übertragung wie konfiguriert, oder Durchführen der erneuten Übertragung und Überspringen der kommenden semi-persistenten Übertragung, beim Empfangen einer Bestätigung oder einer negativen Rückmeldung ausgehend vom Netzknoten (61, 63) in Bezug auf eine hybride automatische Wiederholungsanforderung, von denen eine der Kommunikationsvorrichtung (62) angibt, dass eine erneute Übertragung angehalten und die semi-persistente Übertragung fortgeführt werden soll, und von denen die andere der Kommunikationsvorrichtung (62) angibt, dass die erneute Übertragung durchgeführt werden und die kommende semi-persistente Übertragung übersprungen werden soll.

## Revendications

1. Procédé (80) mis en oeuvre dans un noeud de réseau (61, 63) pour la planification d'un dispositif de communication (62), dans lequel la planification est destinée à un trafic par salves, le procédé (80) comprenant :
- lorsqu'une salve de trafic arrive dans un tampon pour le, ou du, dispositif de communication, la transmission (81), au dispositif de communication (62), d'un message de configuration se rapportant à une planification semi-permanente, le message de configuration comprenant un élément d'information indiquant une périodicité de la planification semi-permanente, dans lequel l'élément d'information a une valeur qui correspond à la périodicité de la planification semi-permanente égale à chaque 1 sous-trame, toutes les 2 sous-trames, toutes les 3 sous-trames, toutes les 4 sous-trames, toutes les 5 sous-trames, toutes les 6 sous-trames, toutes les 7 sous-trames, toutes les 8 sous-trames ou toutes les 9 sous-trames, et
- lorsqu'on détermine qu'une retransmission coïncide avec une transmission semi-persistante entrante pour le dispositif de communication (62), la transmission (82), au dispositif de communication (62), d'un accusé de réception ou d'un accusé de réception négatif dont l'un indique au dispositif de communication (62) d'arrêter la retransmission et de poursuivre avec la transmission semi-persistante telle que configurée, et dont l'autre indique au dispositif de communication (62) de mettre en oeuvre la retransmission et d'omettre la transmission semi-persistante entrante.

2. Procédé (80) selon la revendication 1, dans lequel la transmission de l'accusé de réception indique au dispositif de communication d'arrêter la retransmission et de poursuivre avec la transmission semi-persistante précédemment configurée, et la transmission de l'accusé de réception négatif, indiquant au dispositif de communication (62) de mettre en oeuvre la retransmission et d'omettre la transmission semi-persistante entrante.

3. Procédé (80) selon la revendication 1 ou 2, comprenant la transmission, au dispositif de communication (62), d'une autorisation pour une instance supplémentaire de planification semi-permanente.

4. Procédé (80) selon l'une quelconque des revendications 1 à 3, comprenant la configuration du dispositif de communication (62) pour la planification semi-permanente, la configuration indiquant un critère de libération implicite, le critère de libération implicite spécifiant d'arrêter les transmissions de planification semi-permanente :
- après n transmissions, les transmissions comprenant des unités de données de service vides et/ou non vides, n étant un nombre entier égal ou supérieur à 1, ou
- après m transmissions, les transmissions comprenant des unités de données de service vides, m étant un nombre entier égal ou supérieur à 1, ou
- après m transmissions, les transmissions comprenant des unités de données de service vides, ou après n transmissions, les transmissions comprenant des unités de données de service vides et/ou non vides, selon ce qui arrive en premier, dans lequel n et m sont des nombres entiers égaux ou supérieurs à 1.

5. Procédé (80) selon la revendication 4, comprenant le déclenchement des critères de libération implicites par transmission d'une autorisation unique.

6. Procédé (80) selon l'une quelconque des revendications précédentes, dans lequel la périodicité de planification est basée sur une prévision de modèle de trafic, la prévision étant à son tour basée sur des données de trafic historiques et/ou actuelles.

7. Noeud de réseau (61, 63) pour la planification d'un dispositif de communication (62), dans lequel la planification est destinée à un trafic par salves, le noeud de réseau (61, 63) comprenant un processeur (90) et une mémoire (92), la mémoire (91) contenant des instructions exécutables par le processeur (90), moyennant quoi le noeud de réseau (61, 63) est configuré pour :
- en réponse à une salve de trafic arrivant dans un tampon pour le, ou du, dispositif de communication, transmettre, au dispositif de communication (62), un message de configuration se rapportant à une planification semi-permanente, le message de configuration comprenant un élément d'information indiquant une périodicité de la planification semi-permanente, dans lequel l'élément d'information a une valeur qui correspond à la périodicité de la planification semi-permanente égale à chaque 1 sous-trame, toutes les 2 sous-trames, toutes les 3 sous-trames, toutes les 4 sous-trames, toutes les 5 sous-trames, toutes les 6 sous-trames, toutes les 7 sous-trames, toutes les 8 sous-trames ou toutes les 9 sous-trames, et
- lorsqu'on détermine qu'une retransmission coïncide avec une transmission semi-persistante entrante pour le dispositif de communication (62), transmettre, au dispositif de communication (62), un accusé de réception ou un accusé de réception négatif dont l'un indique au dispositif de communication (62) d'arrêter la retransmission et de poursuivre avec la transmission semi-persistante telle que configurée, et dont l'autre indique au dispositif de communication (62) de mettre en oeuvre la retransmission et d'omettre la transmission semi-persistante entrante.

8. Programme informatique (91) pour un noeud de réseau (61, 63) pour la planification d'un dispositif de communication (62), dans lequel la planification est destinée à un trafic par salves, le programme informatique (91) comprenant un code de programme informatique qui, lorsqu'il est exécuté sur le noeud de réseau (61, 63), amène le noeud de réseau (61, 63) à :
- en réponse à une salve de trafic arrivant dans un tampon pour le, ou du, dispositif de communication, transmettre, au dispositif de communication (62), un message de configuration se rapportant à une planification semi-permanente, le message de configuration comprenant un élément d'information indiquant une périodicité de la planification semi-permanente, dans lequel l'élément d'information a une valeur qui correspond à la périodicité de la planification semi-permanente égale à chaque 1 sous-trame, toutes les 2 sous-trames, toutes les 3 sous-trames, toutes les 4 sous-trames, toutes les 5 sous-trames, toutes les 6 sous-trames, toutes les 7 sous-trames, toutes les 8 sous-trames ou toutes les 9 sous-trames, et
- lorsqu'on détermine qu'une retransmission coïncide avec une transmission semi-persistante entrante pour le dispositif de communication (62), transmettre, au dispositif de communication (62), un accusé de réception ou un accusé de réception négatif dont l'un indique au dispositif de communication (62) d'arrêter la retransmission et de poursuivre avec la transmission semi-persistante telle que configurée, et dont l'autre indique au dispositif de communication (62) de mettre en oeuvre la retransmission et d'omettre la transmission semi-persistante entrante.

9. Procédé (100) mis en oeuvre dans un dispositif de communication (62) activé pour une communication avec un noeud de réseau (61, 63), le procédé (100) comprenant :
- lorsqu'une salve de trafic arrive dans un tampon pour le, ou du, dispositif de communication, la réception (101), depuis le noeud de réseau (61, 63), d'un message de configuration se rapportant à une planification semi-permanente, dans lequel la planification semi-permanente est destinée à un trafic par salves, le message de configuration comprenant un élément d'information indiquant une périodicité de la planification semi-permanente, dans lequel l'élément d'information a une valeur qui correspond à la périodicité de la planification semi-permanente égale à chaque 1 sous-trame, toutes les 2 sous-trames, toutes les 3 sous-trames, toutes les 4 sous-trames, toutes les 5 sous-trames, toutes les 6 sous-trames, toutes les 7 sous-trames, toutes les 8 sous-trames ou toutes les 9 sous-trames, et
- la mise en oeuvre (102) de transmissions vers le noeud de réseau (61, 63) conformément à la planification semi-permanente telle que configurée par le message de configuration.
- à la réception, depuis le noeud de réseau (61, 63), d'un accusé de réception ou d'un accusé de réception négatif se rapportant à une demande de répétition automatique hybride, dont l'un indique au dispositif de communication (62) d'arrêter une retransmission et de poursuivre avec la transmission semi-persistante telle que configurée, et dont l'autre indique au dispositif de communication (62) de mettre en oeuvre la retransmission et d'omettre la transmission semi-persistante entrante, l'arrêt de la retransmission et la poursuite avec la transmission semi-persistante telle que configurée, ou la mise en oeuvre de la retransmission et l'omission de la transmission semi-persistante entrante.

10. Procédé (100) selon la revendication 9, comprenant la réception, depuis le noeud de réseau (61, 63), d'une autorisation pour une instance supplémentaire de planification semi-permanente.

11. Procédé (100) selon la revendication 9 ou 10, comprenant la réception, depuis le noeud de réseau (61, 63), du message de configuration indiquant un critère de libération implicite, le critère de libération implicite spécifiant d'arrêter les transmissions de planification semi-permanente :
- après n transmissions, les transmissions comprenant des unités de données de service vides et/ou non vides, n étant un nombre entier égal ou supérieur à 1, ou
- après m transmissions, les transmissions comprenant des unités de données de service vides, m étant un nombre entier égal ou supérieur à 1, ou
- après m transmissions, les transmissions comprenant des unités de données de service vides, ou après n transmissions, les transmissions comprenant des unités de données de service vides et/ou non vides, selon ce qui arrive en premier, dans lequel n et m sont des nombres entiers égaux ou supérieurs à 1.

12. Procédé (100) selon la revendication 11, comprenant la réception, depuis le noeud de réseau (61, 63) d'une autorisation unique déclenchant les critères de libération implicites.

13. Dispositif de communication (62) activé pour une communication avec un noeud de réseau (61, 63), le dispositif de communication (62) comprenant un processeur (120) et une mémoire (122), la mémoire (122) contenant des instructions exécutables par le processeur (120), moyennant quoi le dispositif de communication (62) est configuré pour :
- en réponse à une salve de trafic arrivant dans un tampon pour le, ou du, dispositif de communication, recevoir, depuis le noeud de réseau (61, 63), un message de configuration se rapportant à une planification semi-permanente, dans lequel la planification semi-permanente est destinée à un trafic par salves, le message de configuration comprenant un élément d'information indiquant une périodicité de la planification semi-permanente, dans lequel l'élément d'information a une valeur qui correspond à la périodicité de la planification semi-permanente égale à chaque 1 sous-trame, toutes les 2 sous-trames, toutes les 3 sous-trames, toutes les 4 sous-trames, toutes les 5 sous-trames, toutes les 6 sous-trames, toutes les 7 sous-trames, toutes les 8 sous-trames ou toutes les 9 sous-trames, et
- mettre en oeuvre des transmissions vers le noeud de réseau (61, 63) conformément à la planification semi-permanente telle que configurée par le message de configuration, et
- à la réception, depuis le noeud de réseau (61, 63), d'un accusé de réception ou d'un accusé de réception négatif se rapportant à une demande de répétition automatique hybride, dont l'un indique au dispositif de communication (62) d'arrêter une retransmission et de poursuivre avec la transmission semi-persistante telle que configurée, et dont l'autre indique au dispositif de communication (62) de mettre en oeuvre la retransmission et d'omettre la transmission semi-persistante entrante, arrêter la retransmission et poursuivre avec la transmission semi-persistante telle que configurée, ou mettre en oeuvre la retransmission et omettre la transmission semi-persistante entrante.

14. Dispositif de communication (62) selon la revendication 13, le dispositif de communication (62) étant configuré pour recevoir, depuis le noeud de réseau (61, 63), le message de configuration indiquant un critère de libération implicite, le critère de libération spécifiant d'arrêter les transmissions de planification semi-permanente :
- après n transmissions, les transmissions comprenant des unités de données de service vides et/ou non vides, n étant un nombre entier égal ou supérieur à 1, ou
- après m transmissions, les transmissions comprenant des unités de données de service vides, m étant un nombre entier égal ou supérieur à 1, ou
- après m transmissions, les transmissions comprenant des unités de données de service vides, ou après n transmissions, les transmissions comprenant des unités de données de service vides et/ou non vides, selon ce qui arrive en premier, dans lequel n et m sont des nombres entiers égaux ou supérieurs à 1.

15. Programme informatique (121) pour un dispositif de communication (62) activé pour une communication avec un noeud de réseau (61, 63), le programme informatique (121) comprenant un code de programme informatique qui, lorsqu'il est exécuté sur le dispositif de communication (62) amène le dispositif de communication (62) à :
- en réponse à une salve de trafic arrivant dans un tampon pour le, ou du, dispositif de communication, recevoir, depuis le noeud de réseau (61, 63), un message de configuration se rapportant à une planification semi-permanente, dans lequel la planification semi-permanente est destinée à un trafic par salves, le message de configuration comprenant un élément d'information indiquant une périodicité de la planification semi-permanente, dans lequel l'élément d'information a une valeur qui correspond à la périodicité de la planification semi-permanente égale à chaque 1 sous-trame, toutes les 2 sous-trames, toutes les 3 sous-trames, toutes les 4 sous-trames, toutes les 5 sous-trames, toutes les 6 sous-trames, toutes les 7 sous-trames, toutes les 8 sous-trames ou toutes les 9 sous-trames, et
- mettre en oeuvre des transmissions vers le noeud de réseau (61, 63) conformément à la planification semi-permanente telle que configurée par le message de configuration, et
- à la réception, depuis le noeud de réseau (61, 63), d'un accusé de réception ou d'un accusé de réception négatif se rapportant à une demande de répétition automatique hybride, dont l'un indique au dispositif de communication (62) d'arrêter une retransmission et de poursuivre avec la transmission semi-persistante telle que configurée, et dont l'autre indique au dispositif de communication (62) de mettre en oeuvre la retransmission et d'omettre la transmission semi-persistante entrante, arrêter la retransmission et poursuivre avec la transmission semi-persistante telle que configurée, ou mettre en oeuvre la retransmission et omettre la transmission semi-persistante entrante.
